# EUROPÄISCHE PATENTSCHRIFT

(11) **EP 2 933 600 B1**
(45) Veröffentlichungstag und Bekanntmachung des Hinweises auf die Patenterteilung: **06.07.2016**
(21) Anmeldenummer: 15162559.7
(22) Anmeldetag: 07.04.2015
(51) Int. Cl.: G01B 11/27

(54) **VERFAHREN ZUM ERMITTELN DER AUSRICHTUNG EINER ERSTEN RIEMENSCHEIBE EINES RIEMENANTRIEBS IN BEZUG AUF EINE ZWEITE RIEMENSCHEIBE DES RIEMENANTRIEBS**
METHOD FOR DETERMINING THE ORIENTATION OF A FIRST PULLEY OF A BELT DRIVE RELATIVE TO A SECOND PULLEY OF THE BELT DRIVE
PROCÉDÉ DE MESURE DESTINÉ À DÉTERMINER L'ORIENTATION D'UNE PREMIÈRE POULIE À COURROIE D'UN ENTRAÎNEMENT À COURROIE PAR RAPPORT À UNE SECONDE POULIE À COURROIE DE L'ENTRAÎNEMENT À COURROIE

(30) Priorität: 14.04.2014 DE 102014207118
(43) Veröffentlichungstag der Anmeldung: 21.10.2015
(73) Patentinhaber: Prüftechnik Dieter Busch AG, 85737 Ismaning (DE)
(72) Erfinder: Lenz, Johann, 85737 Ismaning (DE)

(56) Entgegenhaltungen:
- WO-A1-00/28275
- DE-A1- 10 025 918
- GB-A- 2 329 019
- US-B1- 6 704 115

## Beschreibung

### Hintergrund der Erfindung

Die vorliegende Erfindung betrifft ein Verfahren und ein Meßsystem zum Ermitteln der Ausrichtung einer ersten Riemenscheibe eines Riemenantriebs in Bezug auf eine zweite Riemenscheibe des Riemenantriebs.

Bekannte Verfahren und Meßsysteme zum Ermitteln der Ausrichtung der Riemenscheiben eins Riemenantriebs zueinander dienen dem Ziel eventuelle Abweichungen von einer erwünschten Sollstellung bzw. Soll-Ausrichtung der Riemenscheiben zueinander zu ermitteln bzw. zu erfassen, um auf der Grundlage der ermittelten Ausrichtung entsprechende Korrekturen an der Anordnung der Riemenscheiben zueinander vorzunehmen.

Bekannte Verfahren und Meßsysteme zum Ermitteln der Ausrichtung der Riemenscheiben zueinander ermöglichen eine präzise Ermittlung der Ausrichtung sofern der Riemenantrieb bzw. die Riemenscheiben selbst gewisse Randbedingungen erfüllen. So ist es z.B. bei bekannten Lösungen, bei denen ein Laser an der sich umlaufend um die Drehachse der ersten Riemenscheibe erstreckenden Lauffläche bzw. Seitenfläche der Riemenscheibe angesetzt wird und ein Empfänger dem Laser gegenüberliegend an der Lauffläche bzw. Seitenfläche der zweiten Riemenscheibe angesetzt wird, erforderlich, dass ein gewisser Mindestabstand zwischen dem Laser und dem Empfänger und mithin auch zwischen den beiden Riemenscheiben eingehalten wird, um insbesondere zur Messung bzw. Erfassung eines sogenannten horizontalen Winkelversatzes eine akzeptable Meßgenauigkeit zu erzielen. Derartige Lösungen sind z.B. aus der US 6,704,115 B1, der US 2003/0051354 A1, der US 6,098,297, der US 6,931,738 B2, der US 4,249,294 und der DE 102 06 162 A1 bekannt.

Bekannte Lösungen, bei denen der Laser und der Empfänger flächig jeweils an einer der beiden entgegengesetzten Scheibenflächen der jeweiligen Riemenscheibe angelegt bzw. positioniert werden, arbeiten nur dann mit einer hinreichend hohen Meßgenauigkeit, wenn die Scheibenflächen sehr plan bzw. eben ausgebildet sind. Fertigungstechnisch bedingte Abweichungen von einer planen bzw. ebenen Ausbildung der Scheibenflächen können jedoch ein Maß aufweisen, welches das Arbeiten mit einem derartigen Laser und Empfänger wegen der hohen Meßungenauigkeit unmöglich macht. Lösungen, bei denen ein Laser und ein Empfänger flächig an die Scheibenflächen der Riemenscheiben angelegt werden sind z.B. aus der DE 100 64 814 A1 bekannt.

### Zugrundeliegende Aufgabe

Es ist Aufgabe der Erfindung, ein Verfahren zum Ermitteln der Ausrichtung einer ersten Riemenscheibe eines Riemenantriebs in Bezug auf eine zweite Riemenscheibe des Riemenantriebs anzugeben, mit welchen die Ausrichtung mit einen hohen Genauigkeit ermittelt werden kann ohne dass die Genauigkeit infolge der Ausbildung des Riemenantriebs bzw. der Riemenscheiben eingeschränkt bzw. wesentlich eingeschränkt wird. Diese Aufgabe wird erfindungsgemäß mit einem Verfahren mit den Merkmalen des Anspruchs 1 gelöst.
Das erfindungsgemäße Verfahren zum Ermitteln der Ausrichtung einer ersten Riemenscheibe eines Riemenantriebs in Bezug auf eine zweite Riemenscheibe des Riemenantriebs erfolgt mittels bzw. unter Verwendung eines Meßsystems.
Das Meßsystem umfasst eine Laserlicht-Emissionseinrichtung und eine Laserlicht-Erfassungseinrichtung. Die Laserlicht-Emissionseinrichtung weist einen Laser mit einer Strahlachse auf, der um eine rechtwinkelig zur Strahlachse des Lasers orientierte Laser-Schwenkachse verschwenkbar ist. Ferner ist Laser um eine rechtwinkelig zur Laser-Schwenkachse orientierte Verstellachse der Laserlicht-Emissionseinrichtung verschwenkbar. Unter der rechtwinkeligen Orientierung bzw. rechtwinkeligen Ausrichtung der Laser-Schwenkache zu der Verstellachse ist hierbei zu verstehen, dass die Laser-Schwenkachse die Verstellachse schneiden kann aber nicht schneiden muss, wobei, wenn sich die beiden Achsen nicht schneiden, diese durch eine translatorische Verschiebung einen gemeinsamen Schnittpunkt ausbilden und dann einen rechten Winkel einschließen können. Dies gilt nicht nur bezogen auf diese Achsen sondern nachfolgend für beliebige Achsen, wenn von der rechtwinkeligen Orientierung bzw. rechtwinkeligen Ausrichtung die Rede ist.
Die Laserlicht-Erfassungseinrichtung umfasst einen Laserlicht-Sensor mit einem ebenen Messfeld, wobei das Messfeld ein Koordinatensystem mit einer X1-Koordinatenachse und einer zu der X1-Koordinatenachse rechtwinkeligen Y1-Koordinatenachse aufweist, wobei der Laserlicht-Sensor dazu eingerichtet ist, die X1-Koordinate und Y1-Koordinate eines Laserlicht-Flecks des auf das Messfeld auftreffenden Laserlichtstrahls auf dem Messfeld zu erfassen.

Bei dem Laserlicht-Sensor kann es sich um einen beliebigen mit einem ebenen Messfeld versehenen Laserlicht-Sensor handeln. Besonders bevorzugt handelt es sich um einen Laserlicht-Sensor, der eine Mehrzahl von Zeilensensoren zur Ausbildung des Messfelds aufweist. Die von dem Laserlicht-Sensor erfassten X1-Koordinaten und Y1-Koordinaten können in Form analoger oder digitaler Signale über einen Signalübertragungsweg - auch kabellos- z.B. einer Auswerteeinrichtung, wie z.B. einem Computer z.B. in Form eines Laptops oder eines Tablets zur weiteren Auswertung zugeführt werden. Insbesondere kann es sich bei dem Laserlicht-Sensor um einen PSD-Sensor (PSD ist eine Abkürzung für "Position Sensitive Device") handeln.

### Das Verfahren umfasst die folgenden Schritte:

(A) Anordnen der Laserlicht-Emissionseinrichtung in einer beliebigen Position an der zweiten Riemenscheibe, wobei die Laserlicht-Emissionseinrichtung derart an der zweiten Riemenscheibe angeordnet wird, dass die Laser-Schwenkachse parallel zur Drehachse der Riemenscheibe bzw. der zweiten Riemenscheibe orientiert ist,
(B) Anordnen der Laserlicht-Erfassungseinrichtung in bzw. an einer Position an der zweiten Riemenscheibe, die von der Position der Laserlicht-Emissionseinrichtung beabstandet ist, wobei die Laserlicht-Erfassungseinrichtung derart an der zweiten Riemenscheibe angeordnet wird, dass die Y1-Koordinatenachse des Messfelds parallel zur Drehachse der zweiten Riemenscheibe orientiert ist, die X1-Koordinatenachse eine erwünschte räumliche Anordnung bzw. räumliche Ausrichtung aufweist und das Zentrum des Koordinatensystems einen vordefinierten axialen Abstand zu der zweiten Riemenscheibe aufweist,
(C) Ausrichten der Richtung des von der Laserlicht-Emissionseinrichtung emittierten Laserlichtstrahls rechtwinkelig zur Drehachse der zweiten Riemenscheibe durch Verschwenken des Lasers um die Verstellachse und Erfassen der Y1-Koordinate des Laserlicht-Flecks auf dem Messfeld durch den Laser-Lichtsensor beim Bestrahlen des Messfelds mit dem ausgerichteten Laserlichtstrahl,
(D) Anordnen der Laserlicht-Erfassungseinrichtung in bzw. an wenigstens einer Position an der ersten Riemenscheibe, wobei die Laserlicht-Erfassungseinrichtung derart an der ersten Riemenscheibe angeordnet wird, dass die Y1-Koordinatenachse des Messfelds parallel zur Drehachse der ersten Riemenscheibe orientiert ist, die X1-Koordinatenachse eine erwünschte räumliche Anordnung bzw. räumliche Ausrichtung aufweist und das Zentrum des Koordinatensystems einen vordefinierten axialen Abstand zu der ersten Riemenscheibe aufweist.
(E) Bestrahlen des Messfelds mit dem ausgerichteten Laserlichtstrahl des Lasers der Laserlicht-Emissionseinrichtung - also mit dem Laserlichtstrahl dessen Richtung gemäß Schritt C des Verfahrens ausgerichtet wurde - und Erfassen der X1-Koordinaten und Y1-Koordinaten der sich auf dem Messfeld ausbildenden Laserlicht-Flecken, wobei das Messfeld in der wenigstens einen Position derart durch Verschwenken des Lasers um die Laser-Schwenkachse bestrahlt wird, dass die X1-Koordinaten und Y1-Koordinaten von insgesamt wenigstens drei Laserlicht-Flecken auf dem Messfeld erfasst werden, und
(F) Ermitteln der Ausrichtung der ersten Riemenscheibe in Bezug auf die zweite Riemenscheibe auf der Grundlage der erfassten X1-Koordinaten und Y1-Koordinaten der Laserlicht-Flecken in der wenigstens einen Position und der in Schritt C erfassten Y1-Koordinate.

Die Schritte A und B dienen der Vorbereitung des Schritts C des erfindungsgemäßen Verfahrens, in welchem die Richtung des von dem Laser der Laserlicht-Emissionseinrichtung emittierten Laserlichtstrahls durch Verschwenken des Lasers um die Verstellachse rechtwinkelig zur Drehachse der zweiten Riemenscheibe ausgerichtet wird. Auf diese Weise kann für die zweite Riemenscheibe eine Laserlicht-Referenzebene nach Art einer Schwenkebene durch Schwenken des Lasers um die Laser-Schwenkachse bereitgestellt werden. Diese Schwenkebene ist dann infolge der vorgenommenen Ausrichtung rechtwinkelig zur Drehachse der zweiten Riemenscheibe bzw. parallel zur jeder Scheibenfläche der beiden einander entgegengesetzten Scheibenflächen der zweiten Riemenscheibe orientiert.

Beispielsweise um eine Anordnung bereitzustellen, in welcher das Messfeld der Laserlicht-Erfassungseinrichtung in Schritt C von dem Laserlichtstrahl getroffen werden kann, ist der Laser der Laserlicht-Emissionseinrichtung um eine rechtwinkelig zur Strahlachse des Lasers orientierte Laser-Schwenkachse verschwenkbar, wobei eine erwünschte bzw. eingestellte Schwenkstellung des Lasers um die Laser-Schwenkachse vorzugsweise arretierbar ist bzw. arretierbar ausgebildet ist. Die Arretierung kann hierbei auf beliebige Weise realisiert werden, z.B. durch Reibschluss oder durch Formschluss.

Dadurch, dass in Schritt B die Laserlicht-Erfassungseinrichtung derart an der zweiten Riemenscheibe angeordnet wird, dass die Y1-Koordinatenachse des Messfelds parallel zur Drehachse der zweiten Riemenscheibe orientiert ist, die X1-Koordinatenachse eine erwünschte räumliche Anordnung bzw. Ausrichtung aufweist und das Zentrum des Koordinatensystems einen vordefinierten axialen Abstand zu der zweiten Riemenscheibe aufweist, wird die räumliche Lage des Koordinatensystems des Messfelds bzw. die räumliche Lage des Messfelds an bzw. in der gewählten Position an der zweiten Riemenscheine genau festgelegt bzw. es wird die die räumliche Lage des Messfelds relativ zu der zweiten Riemenscheibe genau festgelegt, da die Position der Laserlicht-Erfassungseinrichtung an der zweiten Riemenscheibe vorgegeben bzw. bekannt ist. Dementsprechend erfolgt auch in Schritt D eine Festlegung des Koordinatensystems relativ zu der ersten Riemenscheibe.

Die erwünschte räumliche Ausrichtung bzw. Anordnung der X1-Koordinatenachse kann auf beliebige denkbare Weise realisiert werden. Insbesondere kann eine erwünschte Anordnung der X1-Koordinatenachse bzw. eine erwünschte Anordnung der X1-Koordinatenachse relativ zu der ersten bzw. zweiten Riemenscheine bzw. relativ zu der Drehachse der ersten bzw. zweiten Riemenscheibe z.B. durch Verschenken um eine Verschwenkachse der Laserlicht-Erfassungseinrichtung eingestellt werden, wobei die Verschwenkachse parallel zur Y1-Koordinatenachse des Messfelds orientiert ist. Vorzugsweise ist hierfür das Messfeld in der Schwenkstellung arretierbar, die zum Einnehmen der erwünschten Anordnung der X1-Koordinatenachse gewählt wird.

Mittels der in Schritt C erfassten Y1-Koordinate des Laserlicht-Flecks auf dem Messfeld durch den Laser-Lichtsensor beim Bestrahlen des Messfelds mit dem ausgerichteten Laserlichtstrahl -also dem rechtwinkelig zur Drehachse der zweiten Riemenscheibe ausgerichteten bzw. orientierten Laserlichtstrahl - kann dann auch der axiale Abstand des Laserlichtstahls bzw. der Laserlicht-Referenzebene von der zweiten Riemenscheibe ermittelt werden, da in Schritt B die Laserlicht-Erfassungseinrichtung unter anderem derart an einer Position an der zweiten Riemenscheibe angeordnet worden ist, dass die Y-Koordinatenachse des Messfelds parallel zur Drehachse der zweiten Riemenscheibe orientiert ist und das Zentrum des Koordinatensystems einen vordefinierten axialen Abstand zu der zweiten Riemenscheibe aufweist. Mithin kann aus der in Schritt C erfassten Y-Koordinate des Laserlicht-Flecks und dem vordefinierten axialen Abstand der Abstand des Laserlichtstahls bzw. der Laserlicht-Referenzebene zu der zweiten Riemenscheibe ermittelt bzw. berechnet werden.

Nach den vorbereitenden Schritten A bis C dienen die Schritte D und E der eigentlichen Erfassung der relativen Ausrichtung der beiden Riemenscheiben zueinander. Hierfür wird in Schritt D die Laserlicht-Erfassungseinrichtung - nachdem sie von der zweiten Riemenscheibe entfernt wurde - in wenigstens einer Position in der bereits oben näher beschriebenen Weise an der ersten Riemenscheine angeordnet, wobei vorzugsweise ein vordefinierter axialer Abstand zu der ersten Riemenscheine gewählt wird, der dem vordefinierten axialen Abstand zu der zweiten Riemenscheibe gemäß Schritt B entspricht. Die Aufrechterhaltung des vordefinierten bzw. vorgegebenen Abstands kann insbesondere dadurch realisiert sein, dass durch Vorsehen eines Abstandshalters an der Laserlicht-Erfassungseinrichtung der vordefinierte bzw. vorgegebene axiale Abstand derart eingehalten werden kann, dass der Abstandshalter beim Anordnen der Laserlicht-Erfassungseinrichtung in der Position an der der zweiten Riemenscheibe bzw. in der wenigstens einen Position an der ersten Riemenscheibe die Einhaltung dieses vordefinierten axialen Abstands sicherstellt. Vorzugsweise einen vordefinierten axialen Abstand zu der ersten Riemenscheine zu wählen, der dem vordefinierten axialen Abstand zu der zweiten Riemenscheibe gemäß Schritt B entspricht, bringt unter anderem den Vorteil mit sich, dass hierdurch der Aufwand bei der Ermittlung der Ausrichtung der ersten Riemenscheibe relativ zu der zweiten Riemenscheibe reduziert werden kann. Ferner sind vorteilhaft keine unter Umständen fehlerbehaftete Umstellungen vorzunehmen.

In Schritt E erfolgt das Bestrahlen des Messfelds mit dem Laserlicht bzw. dem Laserlichtstrahl des Lasers der Laserlicht-Emissionseinrichtung, dessen Richtung gemäß Schritt C ausgerichtet wurde, und das Erfassen der X1-Koordinaten und Y1-Koordinaten der sich auf dem Messfeld ausbildenden Lichtflecke, wobei das Messfeld in der wenigstens einen Position derart durch Verschwenken des Lasers um die Laser-Schwenkachse bestrahlt wird, dass die X1-Koordinaten und 1 Y-Koordinaten von insgesamt wenigstens drei Laserlicht-Flecken auf dem Messfeld erfasst werden. Bei dem Bestrahlen des Messfelds mit dem Laserlicht bzw. dem Laserlichtstrahl des Lasers der Laserlicht-Emissionseinrichtung bleibt die Laserlicht-Emissionseinrichtung in ihrer Position an der zweiten Riemenscheibe und die in Schritt C vorgenommene Ausrichtung der Richtung des Laserlichtstrahls wird beibehalten. Die einzige Bewegung, die vorgenommen wird, ist das Verschwenken des Lasers um die Laser-Schwenkachse zum Bestrahlen des Messfelds mit dem gemäß Schritt C ausgerichteten Laserlichtstrahl, und zwar unter Beibehaltung der Position der Laserlicht-Emissionsein-richtung an der zweiten Riemenscheibe und unter Beibehaltung der eingestellten Ausrichtung des Laserstrahls.

Dadurch, dass die X1-Koordinaten und Y1-Koordinaten von insgesamt wenigstens drei Laserlicht-Flecken auf dem Messfeld erfasst werden kann die Lage der oben beschriebenen Laserlicht-Referenzebene relativ zu der ersten Riemenscheibe genau ermittelt werden, da eine Ebene durch drei Punkte eindeutig festgelegt ist und die X1-Koordinaten und Y1-Koordinaten dieser Laserlicht-Flecken infolge des Anordnens an der ersten Riemenscheibe gemäß Schritt D Koordinaten wenigstens eines Koordinatensystems sind, das relativ zu der ersten Riemenscheibe in einer bekannten Lage angeordnet ist, da die Position, in welcher die Laserlicht-Erfassungseinrichtung in Schritt D an der ersten Riemenscheine angeordnet ist, bekannt ist bzw. feststeht bzw. weil die jeweilige Position eine vordefinierte bzw. vorgegebene Position ist. In dem Falle, dass in Schritt D z.B. ein Anordnen der Laserlicht-Erfassungseinrichtung in zwei oder drei verschiedenen Positionen an der ersten Riemenscheibe vorgesehen ist, wären es dann zwei oder drei Koordinatensysteme mit einer jeweils zu der ersten Riemenscheibe bekannten Lage.

Es versteht sich, dass die X1-Koordinaten und Y1-Koordinaten der Laserlicht-Flecken durch Koordinatentransformation auch in einziges Koordinatensystem transformiert werden können, welches seinen Ursprung in einer definierten Position in Bezug auf die erste Riemenscheibe hat, so dass die Lage der Laserlicht-Referenzebene vorteilhaft auf einfache Weise in einem einzigen Koordinatensystem dargestellt werden kann.

Aus der Lage der oben beschriebenen Laserlicht-Referenzebene relativ zu der ersten Riemenscheibe kann dann auch unter Hinzuziehen bzw. Verwenden des Abstands der Laserlicht-Referenzebene zu der ersten Riemenscheibe (vgl. auch oben) die Ausrichtung der ersten Riemenscheibe in Bezug auf die zweite Riemenscheibe ermittelt werden, wobei die Ausrichtung die Lage der Laserlicht-Referenzebene relativ zu der ersten Riemenscheibe und den Abstand der Laserlicht-Referenzebene zu der zweiten Riemenscheibe umfasst bzw. welche durch die Lage der Laserlicht-Referenzebene relativ zu der ersten Riemenscheibe und den Abstand der Laserlicht-Referenzebene zu der zweiten Riemenscheibe gekennzeichnet ist.

Im Lichte des oben Dargelegten umfasst das Verfahren den Schritt F zum Ermitteln der Ausrichtung der ersten Riemenscheibe in Bezug auf die zweite Riemenscheibe auf der Grundlage der erfassten X1-Koordinaten und Y1-Koordinaten der Laserlicht-Flecken in der wenigstens einen Position und der in Schritt C erfassten Y1-Koordinate, wobei es sich bei den erfassten X1-Koordinaten und Y1-Koordinaten der Laserlicht-Flecken um die in Schritt E erfassten X1-Koordinaten und Y1-Koordinaten handelt.

Etwas detaillierter bzw. alternativ kann das Verfahren auch den folgenden Schritt F umfassen: Ermitteln der Ausrichtung der ersten Riemenscheibe in Bezug auf die zweite Riemenscheibe auf der Grundlage der erfassten X1-Koordinaten und Y1-Koordinaten der Laserlicht-Flecken und der Lage des Koordinatensystems des Messfelds (bzw. der Lage des Ursprungs des Koordinatensystems des Messfelds) relativ zu der ersten Riemenscheibe in der wenigstens einen Position bzw. in der wenigstens einen vorgegebenen Position an der ersten Riemenscheibe und auf der Grundlage der in Schritt C erfassten Y1-Koordinate. Hierbei ist die Lage des Koordinatensystems des Messfelds relativ zu der ersten Riemenscheibe in der wenigstens einen Position der Laserlicht-Erfassungseinrichtung an der ersten Riemenscheibe aus den Koordinaten dieser Position in einem Riemenscheibenkoordinatensystem der ersten Riemenscheibe ermittelbar, das eine vordefinierte Lage bzw. vorgegebene Lage in Bezug auf die erste Riemenscheibe aufweist bzw. welches ein mit der ersten Riemenscheibe körperfestes Koordinatensystem ist. Um die Position der Laserlicht-Erfassungseinrichtung an der Riemenscheibe zu definieren könnte z.B. ein beliebiger Körperpunkt der Laserlicht-Erfassungseinrichtung verwendet werden, dessen Koordinaten in dem Riemenscheibenkoordinatensystem dann die Position der Laserlicht-Erfassungseinrichtung definieren. Dementsprechend könnte auch die jeweilige Position der Laserlicht-Emissionseinrichtung an der jeweiligen Riemenscheibe definiert werden. Insbesondere können sehr vereinfachend die Koordinaten des Zentrums des Koordinatensystems des Messfelds in dem Riemenscheibenkoordinatensystem zur Definition der Position der Laserlicht-Erfassungseinrichtung an der Riemenscheibe verwendet werden.

Insgesamt betrachtet kann mittels des oben beschriebenen Verfahrens die Ausrichtung der ersten Riemenscheibe in Bezug auf die zweite Riemenscheibe mit einen hohen Genauigkeit ermittelt werden, und zwar ohne dass die Genauigkeit infolge der Ausbildung des Riemenantriebs bzw. der Riemenscheiben eingeschränkt bzw. wesentlich eingeschränkt wird. Denn insbesondere dadurch, dass in Schritt C die Richtung des Laserlichtstrahls rechtwinkelig zur Drehachse der zweiten Riemenscheibe ausgerichtet wird, spielen fertigungstechnisch bedingte Abweichungen von einer planen bzw. ebenen Ausbildung der Scheibenflächen keine Rolle - ganz im Unterschied zu bekannten Lösungen, bei denen ein Laser und ein Empfänger flächig an die Scheibenflächen der Riemenscheiben angelegt werden. Das Ausrichten der Richtung des Laserlichtstrahls rechtwinkelig zur Drehachse der zweiten Riemenscheibe kann auf jede denkbare Weise erfolgen. So wäre es z.B. möglich, den Laserlichtstrahl zum Ausrichten rechtwinkelig zu einem Anschlagstab in Form eines Rundstabs bzw. eines Stabs in Form eines Kreiszylinders auszurichten, der mit seiner Mantelfläche an die umlaufende Seitenfläche bzw. umlaufende Lauffläche der Riemenscheibe flächig angelegt wird, um eine parallele Ausrichtung zur Drehachse bereitzustellen. Mithin wäre man bei Anwenden des erfindungsgemäßen Verfahrens vorteilhaft z.B. nicht mehr auf eine der beiden einander entgegengesetzten Scheibenflächen angewiesen, die unter Umständen sehr stark von einer idealen ebenen Ausbildung abweichen können. Vor allem kann durch die bereitgestellte Ausrichtungsfunktionalität des Lasers das Verfahren sehr flexible für sehr unterschiedliche Riemenantriebe verwendet werden.

Besonders bevorzugt ist der Laser der Laserlicht-Emissionseinrichtung ein Punktlaser. Mittels eines Punktlasers ist das Verfahren infolge der Strahlqualität des Punktlasers insbesondere auch für die Ausrichtung von Riemenscheiben einsetzbar, die einen großen Abstand von z.B.10 Metern oder mehr als 10 Metern oder mehr als 20 Metern aufweisen, wobei bei den meisten Riemenantrieben die Abstände der Riemenscheiben weit unterhalb von 10 Metern - meist unter 1 Meter - liegen, so dass für diese Riemenantriebe mittels eines Punktlasers eine sehr genaue Ausrichtungs-Ermittlung möglich ist.

Besonders bevorzugt kann der Laser bzw. Punktlaser eine Strahlabweichung aufweisen, die kleiner ist als 0,3 mrad, einhergehend mit einer hohen Fokussierbarkeit.

Das Anordnen der Laserlicht-Erfassungseinrichtung in der wenigstens einen Position an der ersten Riemenscheibe bzw. in der Position an der zweiten Riemenscheibe kann vorzugsweise mittels einer Halteeinrichtung der Laserlicht-Erfassungseinrichtung erfolgen, die dazu eingerichtet ist, die Laserlicht-Erfassungseinrichtung in der jeweiligen Position an der ersten bzw. zweiten Riemenscheibe betriebssicher zu halten. Auch die Laserlicht-Emissionseinrichtung kann vorzugsweise eine derartige Halteeinrichtung aufweisen.

Die Schritte A und B des Verfahrens können zeitgleich bzw. wenigstens teilweise zeitglich vorgenommen werden. Die Schritte A und B können auch aufeinanderfolgend bzw. in umgekehrter Reihenfolge aufeinanderfolgend vorgenommen werden, also derart, dass Schritt B nicht nur nach Schritt A vorgenommen werden kann, sondern dass auch Schritt A nach Schritt B vorgenommen werden kann. Die Schritte C, D und E werden alle nach den Schritten A und B vorgenommen, wobei Schritt D nach Schritt C und Schritt E nach Schritt D vorgenommen wird. Schritt F wird vorzugsweise nach Schritt E vorgenommen, kann jedoch insbesondere bei Einsatz eines Computers zum Ermitteln der Ausrichtung zumindest zweitweise während des Schritts E vorgenommen werden.

Unter einem axialen Abstand ist vorstehend und nachstehend ein in der axialen Richtung bemessener Abstand zu verstehen, wobei die axiale Richtung eine zu der Drehachse der ersten bzw. zweiten Riemenscheibe parallele Richtung ist.

Bei der vorstehend und nachstehend erwähnten X1-Koordinate und Y1-Koordinate bzw. X2-Koordinate und Y2-Koordinate des Laserlicht-Flecks des auf das Messfeld auftreffenden Laserlichtstrahls bzw. des sich auf dem Messfeld beim Bestrahlen mit dem Laserlichtstrahl ausbildenden Laserlicht-Flecks handelt es sich selbstverständlich um die Koordinaten eines Punktes obwohl der Laserlicht-Fleck immer eine flächige Ausdehnung auf dem Messfeld hat. Unter den X1-Koordinaten und Y1-Koordinaten bzw. X2-Koordinaten und Y2-Koordinaten des Laserlicht-Flecks sind vorstehend und nachstehend immer die Koordinaten eines Punktes zu verstehen, der aus Ausbildung der Fläche und/oder Helligkeitsverteilung des Laserlicht-Flecks auf der Fläche ermittelt werden kann. Insbesondere kann es sich bei dem Punkt z.B. um den Flächenschwerpunkt des Laserlicht-Flecks handeln. Die Ermittlung bzw. Berechnung des Punktes kann vorzugsweise automatisiert mittels einer Berechnungsvorrichtung, wie z.B. einem Computer auf der Grundlage von dem jeweiligen Laserlicht-Fleck zugeordneten digitalen und/oder analogen Signalen vorgenommen werden, die von dem Laserlicht-Sensor ausgegeben werden. Sofern es sich beim Laserlicht-Sensor um einen PSD-Sensor handelt, kann die Berechnung des Flächenschwerpunkts z.B. in bekannter Weise auf der Grundlage geeigneter Widerstandsmessungen an den Sensorecken bzw. Felderecken erfolgen. Bei der Schwerpunktberechnung wird dann eine Fläche auf dem jeweiligen Messfeld ausgewertet. Diese Berechnung an einem PSD-Sensor kann es ermöglichen, Bewegungen eines Laserlicht-Flecks auf dem Messfeld im µm-Bereich zu ermitteln, so dass die Größe des Laserlicht-Flecks bei einem PSD-Sensor eine untergeordnete Rolle spielt. Bei einer bevorzugten Ausführungsform des erfindungsgemäßen Verfahrens ist der Laserlicht-Sensor um eine Verschwenkachse verschwenkbar, die parallel zur Y1-Koordinatenachse des Messfelds orientiert ist, wobei die Laserlicht-Erfassungseinrichtung bzw. der Laserlicht-Sensor in Schritt D in drei voneinander beabstandeten Positionen an der ersten Riemenscheibe angeordnet wird und in jeder Position der Laser und der Laserlicht-Sensor durch Verschwenken der Laserlicht-Sensors um die Verschwenkachse und/oder durch Verschwenken des Lasers um die Laser-Schwenkachse in eine relative Position zueinander gebracht werden, in welcher der Laserlichtstrahl auf das Messfeld auftreffen kann, wobei in jeder Position die X1-Koordinate und Y1-Koordinate wenigstens eines Laserlicht-Flecks auf dem Messfeld erfasst werden.

Bei dieser bevorzugten Ausführungsform ist die Laserlicht-Erfassungseinrichtung in drei voneinander beabstandeten Positionen an der ersten Riemenscheibe anzubringen, so dass auf einfache und praktische Weise durch Verlagern der Laserlicht-Erfassungseinrichtung an der zweiten Riemenscheibe die X-Koordinaten und Y-Koordinaten von insgesamt wenigstens drei Laserlicht-Flecken auf dem Messfeld erfasst werden können, die zur Ermittlung der Lage der oben beschriebenen Laserlicht-Referenzebene relativ zu der ersten Riemenscheibe erforderlich sind. Bevorzugt ist hierbei sowohl eine Schwenkstellung des Laserlicht-Sensors um die Verschwenkachse arretierbar als auch eine Schwenkstellung des Lasers um die Laser-Schwenkachse arretierbar, so dass vorteilhaft das Messfeld unter betriebssicherer Beibehaltung der relativen Position des Lasers zu dem Laserlicht-Sensor mit dem Laserlichtstrahl bestrahlt werden kann.

Vorzugsweise sind die drei Positionen in umfänglicher Richtung bzw. in umfänglicher Richtung um die Drehachse der ersten Riemenscheibe voneinander beabstandet bzw. die drei Positionen werden derart gewählt, dass das Zentrum des Koordinatensystems des Messfelds in einer der Positionen von dem Zentrum des Messfelds in jeder anderen der beiden übrigen Positionen in umfänglicher Richtung bzw. in umfänglicher Richtung um die Drehachse der ersten Riemenscheibe beabstandet ist. Derartige Positionen können vorteilhaft insbesondere durch Vorsehen geeigneter Halteeinrichtungen bzw. Haltevorrichtungen zum Halten bzw. Anbringen der Laserlicht-Erfassungseinrichtung an der ersten Riemenscheibe mit einer hohen Genauigkeit und Reproduzierbarkeit eingenommen werden.

Besonders vorteilhaft sind zwei der Positionen derart gewählt, dass eine Verbindungsgerade, die das Zentrum des Koordinatensystems des Messfelds in der einen Position mit dem Zentrum des Koordinatensystems des Messfelds in der anderen Position verbindet, die Drehachse der ersten Riemenscheibe schneidet. Durch Vorsehen dieser Anordnungsgeometrie kann ein großer Abstand zwischen den beiden Positionen bereitgestellt werden, so dass letztlich die Genauigkeit der zu ermittelnden Ausrichtung der ersten Riemenscheibe in Bezug auf die zweite Riemenscheibe vorteilhaft erhöht werden kann. Denn je größer der gewählte Abstand zwischen den jeweiligen Positionen desto kleiner ist der Einfluss möglicher Fehlerquellen bzw. Einflussgrößen, welche der Meßgenauigkeit Grenzen setzen, wie z.B. die Meßgenauigkeit des Messfelds.

Bei einer weiteren vorteilhaften Ausführungsform des Verfahrens weist in jeder der beiden Positionen das Zentrum des Koordinatensystems einen Abstand zu der Drehachse aufweist, der dem Durchmesser der Riemenscheibe entspricht oder der dem 0,8-fachen bis 0,95-fachen des Durchmessers der Riemenscheibe entspricht. Mit einem derart großen Abstand kann die Ausrichtung der ersten Riemenscheibe in Bezug auf die zweite Riemenscheibe sehr genau ermittelt werden, da dann die Fehlerquellen bzw. Einflussgrößen nur geringfügig ins Gewicht fallen. Insbesondere bei vergleichsweise kleinen Riemenscheiben mit einem Durchmesser von kleiner als 80 mm ist ein Abstand innerhalb des obigen Bereichs besonders gut realisierbar und mithin vorteilhaft.

Bei einer praktischen Ausführungsform des Verfahrens wird die Laserlicht-Erfassungseinrichtung in Schritt D in einer Position an der ersten Riemenscheibe angeordnet wird und der Laser der Laserlicht-Emissionseinrichtung wird in Schritt E derart verschwenkt, dass sich der Laserlicht-Fleck auf dem Messfeld bewegt.

Auch mittels dieser praktischen Ausführungsform des Verfahrens kann die Ausrichtung der ersten Riemenscheibe in Bezug auf eine zweite Riemenscheibe sehr genau ermittelt werden, wobei vorteilhaft die Laserlicht-Erfassungseinrichtung nur in einer Position an der ersten Riemenscheibe anzuordnen ist und die zum Ermitteln der Ausrichtung erforderlichen wenigstens drei Laserlicht-Flecken durch einfaches Bewegen des Laserlicht-Flecks auf dem Messfeld ausgebildet werden können, wobei dieses Bewegen des Laserlicht-Flecks durch einfach vornehmbares Verschwenken des Lasers um die Laser-Schwenkachse bewerkstelligt werden kann.

Bei einer weiteren bevorzugten Ausführungsform weist die Laserlicht-Erfassungseinrichtung ein zweites Messfeld mit einem Koordinatensystem mit einer X2-Koordinatenachse und einer zu der X2-Koordinatenachse rechtwinkeligen Y2-Koordinatenachse auf, wobei die Y2-Koordinatenachse des zweiten Messfelds parallel zur Y1-Koordinatenachsee des ersten Messfelds orientiert ist, wobei ferner ein Strahlungsteiler vorgesehen ist, der den Laserlichtstrahl der Laserlicht-Emissionseinrichtung vor dem Auftreffen auf die Messfelder in einen ersten Teilstrahl und einen zweiten Teilstrahl aufteilt, wobei der erste Teilstrahl auf das erste Messfeld auftreffen kann, und wobei der zweite Teilstrahl auf das zweite Messfeld auftreffen kann, wobei die Laufzeit des ersten Teilstrahls bis zu dem ersten Messfeld kleiner ist als die Laufzeit des zweiten Teilstrahls bis zu dem zweiten Messfeld, wobei der Strahlungsteiler eine ebene Eintrittsfläche und eine zu dieser parallele Austrittsfläche aufweist, wobei die Eintrittsfläche parallel zur Y1-Koordinatenachse ausgerichtet ist, wobei das erste und zweite Messfeld derart in Bezug auf den Strahlungsteiler angeordnet sind, dass wenn der erste Teilstrahl beim Bestrahlen des ersten Messfelds rechtwinkelig zur Y1-Koordinatenachse einen Laserlicht-Fleck im Zentrum des Koordinatensystems des ersten Messfelds ausbildet, der zweite Teilstrahl beim Bestrahlen des zweiten Messfelds einen Laserlicht-Fleck im Zentrum des Koordinatensystems des zweiten Messfelds ausbildet, wobei infolge des Laufzeitunterschieds zwischen den beiden Teilstrahlen in einem Zustand, in welchem in Schritt C die Strahlrichtung des Laserlichtstrahls von dem Zustand bzw. der Situation abweicht, in welchem bzw. in welcher die Strahlrichtung rechtwinkelig zur Drehachse der zweiten Riemenscheibe orientiert ist, eine Differenz (bzw. eine von Null verschiedene Differenz) zwischen der Y1-Koordinate des Laserlicht-Flecks auf dem ersten Messfeld und der Y2-Koordinate des Laserlicht-Flecks auf dem zweiten Messfeld vorliegt, so dass in Schritt C der Laser um die Verstellachse verschwenkt wird bis die Differenz zwischen den Y1-Koordinate und derY2-Koordinate gleich null bzw. im wesentlichen gleich null ist.

Diese bevorzugte Ausführungsform ermöglicht vorteilhaft auf sehr einfache und praktische Weise das Ausrichten der Richtung des von der Laserlicht-Emissionseinrichtung emittierten Laserlichtstrahls rechtwinkelig zur Drehachse der zweiten Riemenscheibe in Schritt C. Der Laser ist lediglich solange um die Verstellachse zu verschwenken bis die Differenz zwischen der Y1-Koordinate und der Y2-Koordinate gleich null ist bzw. bis sich die Y2-Koordinate nicht mehr von der Y1-Koordinate unterscheidet.

Der erste Teilstrahl ist vorzugsweise der sich durchgehend durch den Strahlungsteiler erstreckende Teilstrahl, der aus der ebenen Austrittsfläche heraustritt bzw. parallel versetzt zum Laserlichtstrahl aus der ebenen Austrittsfläche heraustritt während der zweite Teilstrahl der an der ebenen Eintrittsfläche reflektierte Teilstrahl sein kann. Die umgekehrte Konstellation ist ebenfalls denkbar, also dass der erste Teilstrahl der reflektierte Teilstrahl ist und der zweite Teilstrahl der aus der Austrittsfläche heraustretende Teilstrahl ist. Insbesondere kann auch z.B. wenigstens ein weiteres Umlenkmittel, wie z.B. ein Spiegel, vorgesehen sein, um das Auftreffen des ersten Teilstrahls auf das erste Messfeld und das Auftreffen des zweiten Teilstrahls auf das zweite Messfeld zu realisieren bzw. zu ermöglichen. Ferner kann z.B. auch wenigstens eine Linse zur Beeinflussung bzw. Ausbildung des Strahlungswegs der Teilstrahlen vorgesehen sein.

Das Meßsystem zum Ermitteln der Ausrichtung einer ersten Riemenscheibe eines Riemenantriebs in Bezug auf eine zweite Riemenscheibe des Riemenantriebs weist eine Laserlicht-Emissionseinrichtung und eine Laserlicht-Erfassungseinrichtung auf, wobei die Laserlicht-Emissionseinrichtung einen Laser mit einer Strahlachse aufweist, der um eine rechtwinkelig zur Strahlachse des Lasers orientierte Laser-Schwenkachse verschwenkbar ist, wobei der Laser ferner um eine rechtwinkelig zur Laser-Schwenkachse orientierte Verstellachse der Laserlicht-Emissionseinrichtung verschwenkbar ist, wobei die Laserlicht-Erfassungseinrichtung einen Laserlicht-Sensor mit einem ebenen Messfeld umfasst, wobei das Messfeld ein Koordinatensystem mit einer X1-Koordinatenachse und einer zu der X1-Koordinatenachse rechtwinkeligen Y1- Koordinatenachse aufweist, wobei der Laserlicht-Sensor dazu eingerichtet ist, die X1-Koordinate und Y1-Koordinate eines Laserlicht-Flecks des auf das Messfeld auftreffenden Laserlichtstrahls auf dem Messfeld zu erfassen.

Die Laserlicht-Emissionseinrichtung ist dazu eingerichtet, derart in einer Position an einer Riemenscheibe angeordnet zu werden, dass die Laser-Schwenkachse parallel zur Drehachse der Riemenscheibe orientiert ist. Die Laserlicht-Erfassungseinrichtung ist dazu eingerichtet ist, derart in einer Position an einer Riemenscheibe angeordnet zu werden, dass die Y1-Koordinatenachse des Messfelds parallel zur Drehachse der Riemenscheibe orientiert ist, die X-Achse eine erwünschte räumliche Anordnung bzw. Ausrichtung aufweist und das Zentrum des Koordinatensystems einen vordefinierten axialen Abstand zu der Riemenscheibe aufweist. Diese Einrichtung der Laserlicht-Emissionseinrichtung und Laserlicht-Erfassungseinrichtung kann z.B. jeweils mittels einer Halteeinrichtung bzw. Haltevorrichtung der Laserlicht-Emissionseinrichtung bzw. Laserlicht-Erfassungseinrichtung zum Halten bzw. Anordnen in der jeweiligen Position an der Riemenscheibe realisiert sein.

Mittels des Meßsystems ist - aus den bereits oben dargelegten Gründen- eine Ermittlung der Ausrichtung einer ersten Riemenscheibe eines Riemenantriebs in Bezug auf eine zweite Riemenscheibe des Riemenantriebs mit einer hohen Genauigkeit möglich, und zwar ohne dass die Genauigkeit infolge der Ausbildung des Riemenantriebs bzw. der Riemenscheiben eingeschränkt bzw. wesentlich eingeschränkt wird.

Bei einer praktischen Ausführungsform des Meßsystems weist die Laserlicht-Erfassungseinrichtung ein zweites Messfeld mit einem Koordinatensystem mit einer X2-Koordinatenachse und einer zu der X2-Koordinatenachse rechtwinkeligen Y2-Koordinatenachse auf, wobei die Y2-Koordinatenachse des zweiten Messfelds parallel zur Y1-Koordinatenachse des anderen Messfelds orientiert ist, wobei ferner ein Strahlungsteiler vorgesehen ist, der das Laserlicht bzw. den Laserlichtstrahl der Laserlicht-Emissionseinrichtung vor dem Auftreffen auf die Messfelder in einen ersten und einen zweiten Teilstrahl aufteilt, wobei der erste Teilstrahl auf das erste Messfeld auftreffen kann, und der zweite Teilstrahl auf das zweite Messfeld auftreffen kann, wobei die Laufzeit des ersten Teilstrahls bis zu dem ersten Messfeld kleiner ist als die Laufzeit des zweiten Teilstrahls bis zu dem zweiten Messfeld, wobei der Strahlungsteiler eine ebene Eintrittsfläche und eine zu dieser parallele Austrittsfläche aufweist, wobei die Eintrittsfläche parallel zur Y1-Koordinatenachse ausgerichtet ist, wobei das erste und zweite Messfeld derart in Bezug auf den Strahlungsteiler angeordnet sind, dass wenn der erste Teilstrahl beim Bestrahlen des ersten Messfelds rechtwinkelig zur Y1-Koordinatenachse einen Laserlicht-Fleck im Zentrum des Koordinatensystems des ersten Messfelds ausbildet, der zweite Teilstrahl beim Bestrahlen des zweiten Messfelds einen Laserlicht-Fleck im Zentrum des Koordinatensystems des zweiten Messfelds ausbildet.

Diese praktische Ausführungsform ermöglicht vorteilhaft auf sehr einfache und praktische Weise das Ausrichten der Richtung des von der Laserlicht-Emissionseinrichtung emittierten Laserlichtstrahls rechtwinkelig zur Drehachse der zweiten Riemenscheibe. Der Laser ist lediglich solange um die Verstellachse zu verschwenken bis die Differenz zwischen der Y1-Koordinate und der Y2-Koordinate gleich null ist.

Bei einer bevorzugten Ausführungsform des Meßsystems weist die Laserlicht-Emissionseinrichtung wenigstens einen Rundstab zum flächigen Anlegen der Mantelfläche bzw. Zylinderfläche des Rundstabs an wenigstens eine umlaufende Fläche der Riemenscheibe beim Anbringen derselben in der Position an der Riemenscheibe auf, wobei sich umlaufendende Fläche der Riemenscheibe in axialer Richtung der Riemenscheibe und umlaufendend um die Drehachse erstreckt, und wobei die Längsache des Rundstabs parallel zur Laser-Schwenkachse der Laserlicht-Emissionseinrichtung orientiert ist. Mittels eines derartigen Rundstabs bzw. kreiszylinderförmigen Stabs kann die Laserlicht-Emissionseinrichtung derart in einer Position an der Riemenscheine angeordnet werden, dass eine sehr exakte parallele Ausrichtung der Laser-Schwenkachse zur Drehachse realisiert werden kann, einhergehend mit einer sehr hohen Genauigkeit der ermittelten Ausrichtung der Riemenscheiben zueinander. Bei der umlaufenden Fläche, an welcher die Mantelfläche des Rundstabs flächig angelegt wird, kann es sich insbesondere um die Lauffläche bzw. Seitenfläche der Riemenscheibe bzw. um eine Teilfläche derselben handeln Diese Flächen sind in der Regel viel präziser gefertigt als jede der beiden einander entgegengesetzten Scheibenflächen der Riemenscheibe, so dass eine Ausrichtung über diese Flächen eine hohe Genauigkeit bei der Ermittlung der Ausrichtung der Riemenscheiben zueinander mit sich bringt.

Bei einer weiteren bevorzugten Ausführungsform des Meßsystems weist die Laserlicht-Erfassungseinrichtung wenigstens einen Rundstab zum flächigen Anlegen der Mantelfläche bzw. Zylinderfläche des Rundstabs an wenigstens eine umlaufene Fläche der Riemenscheibe beim Anbringen derselben in der Position an der Riemenscheibe auf, wobei sich umlaufendende Fläche der Riemenscheibe in axialer Richtung der Riemenscheibe und umlaufend um die Drehachse erstreckt, und wobei die Längsache des Rundstabs parallel zur Y-Koordinatenachse des Messfelds orientiert ist.

Mittels eines derartigen Rundstabs bzw. kreiszylinderförmigen Stabs kann analog zu dem oben Dargelegten die Laserlicht-Erfassungseinrichtung derart in einer Position an der Riemenscheine angeordnet werden, dass eine sehr exakte parallele Ausrichtung der Y-Koordinatenachse des Messfelds zur Drehachse realisiert werden kann, einhergehend mit der Bereitstellung einer hohen Genauigkeit bei der Ermittlung der Ausrichtung der Riemenscheiben zueinander. Insbesondere kann mittels eines derartigen Rundstabs die Verschwenkachse des Laserlicht-Sensors vorteilhaft sehr nahe an den Randbereich der jeweiligen Riemenscheibe herangeführt werden, wodurch wiederum vorteilhaft große Meßabstände zwischen verschiedenen Positionen realisiert werden können, welche die Genauigkeit der ermittelten Ausrichtung vorteilhaft erhöhen.

### Kurzbeschreibung der Zeichnung

Nachfolgend werden Ausführungsbeispiele der Erfindung anhand der beigefügten Zeichnung näher erläutert. In der Zeichnung zeigen:
- Fig. 1A: eine dreidimensionale Darstellung eines Beispiels eines Meßsystems in Verbindung mit einem Riemenantrieb
- Fig. 1 B: eine dreidimensionale Darstellung der LaserlichtEmissionseinrichtung des Meßsystems nach Fig. 1A,
- Fig. 1C: eine schematische Skizze zur Veranschaulichung eines LaserlichtSensors
- Fig. 2A: eine weitere dreidimensionale Darstellung des Meßsystems, mit der Laserlicht-Emissionseinrichtung und der LaserlichtErfassungseinrichtung angeordnet an einer zweiten Riemenscheibe des Riemenantriebs,
- Fig. 2B: eine schematische Skizze zur Veranschaulichung des Ausrichtens des Laserlichtstrahls,
- Fig. 3A bis 3C: jeweils dreidimensionale Darstellungen des Meßsystems in Verbindung mit dem Riemenantrieb, die sich durch die Anordnung der Laserlicht-Emissionseinrichtung relativ zu der LaserlichtErfassungseinrichtung voneinander unterscheiden,
- Fig. 4A bis 4C: jeweils schematische Darstellungen zur Veranschaulichung möglicher Fehlausrichtungen,
- Fig. 5: eine schematische Skizze zur Veranschaulichung der Lage des Koordinatensystem des Messfelds in unterschiedlichen Positionen an der ersten bzw. zweiten Riemenscheibe,
- Fig. 6A, 6B: jeweils schematische Skizzen zur Veranschaulichung des Ausrichtens des Laserlichtstrahls mittels der LaserlichtErfassungseinrichtung unter Verwendung zweier Messfelder und eines Strahlungsteilers,

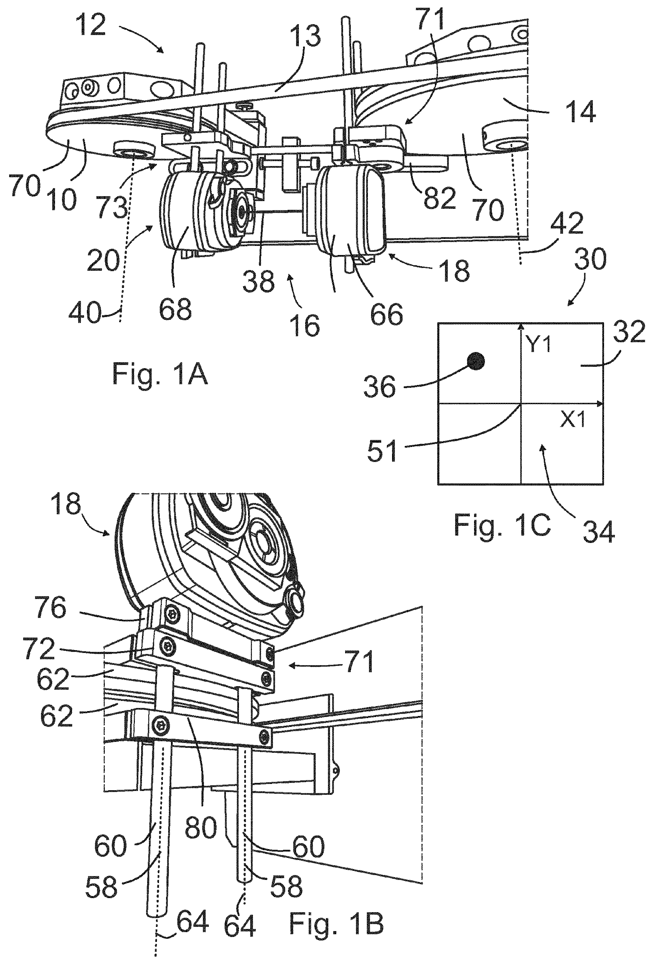

Das Meßsystem 16 nach Fig. 1A zum Ermitteln der Ausrichtung einer ersten Riemenscheibe 10 des Riemenantriebs 12 mit Riemen 13 in Bezug auf eine zweite Riemenscheibe 14 des Riemenantriebs 12 weist eine Laserlicht-Emissionseinrichtung 18 und eine Laserlicht-Erfassungseinrichtung 20 auf.

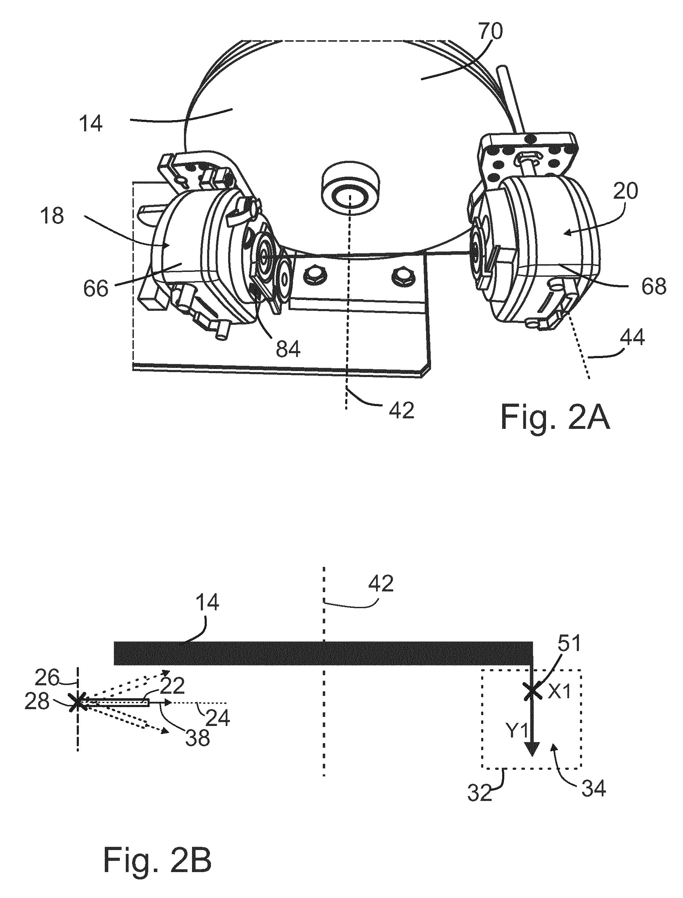

Die Laserlicht-Emissionseinrichtung 18 weist einen Laser 22 mit einer Strahlachse 24 auf, der um eine rechtwinkelig zur Strahlachse 24 des Lasers 22 orientierte Laser-Schwenkachse 26 verschwenkbar ist. Ferner ist der Laser 22 um eine rechtwinkelig zur Laser-Schwenkachse 26 orientierte Verstellachse 28 der Laserlicht-Emissionseinrichtung 18 verschwenkbar. Der Laser 22 der Laserlicht-Emissionseinrichtung 18 ist einem Gehäuse 66 der Laserlicht-Emissionseinrichtung 18 aufgenommen und mithin in den dreidimensionalen Darstellung nicht zu erkennen. Der Aufbau des Lasers 22 ist jedoch in der Fig. 2B schematisch näher veranschaulicht, aus welcher insbesondere auch die Lagen bzw. Ausrichtungen der Verstellache 28 und der Laser-Schenkachse 26 näher hervorgehen. In der Fig. 2B und auch in übrigen Figuren ist mit dem Symbol "X" jeweils eine Achse dargestellt, die sich rechtwinkelig in die Zeichenebene der Zeichnung hinein bzw. aus dieser heraus erstreckt.

Die Laserlicht-Erfassungseinrichtung 20 weist einen Laserlicht-Sensor 30 mit einem ebenen Messfeld 32 auf. Das Messfeld 32 weist ein Koordinatensystem 34 mit einer X1-Koordinatenachse und einer zu der X1-Koordinatenachse rechtwinkeligen Y1-Koordinatenachse auf. Der Laserlicht-Sensor 30 der Laserlicht-Erfassungseinrichtung 20 ist in einem Gehäuse 68 der Laserlicht-Erfassungseinrichtung 20 aufgenommen und mithin in den dreidimensionalen Darstellung nicht zu erkennen. Der Aufbau des Laserlicht-Sensors 30 ist jedoch in der Fig. 1C näher veranschaulicht.

Der Laserlicht-Sensor 30 ist dazu eingerichtet ist, die X1-Koordinate und Y1-Koordinate eines Laserlicht-Flecks 36 des auf das Messfeld 32 auftreffenden Laserlichtstrahls 38 auf dem Messfeld 32 zu erfassen.

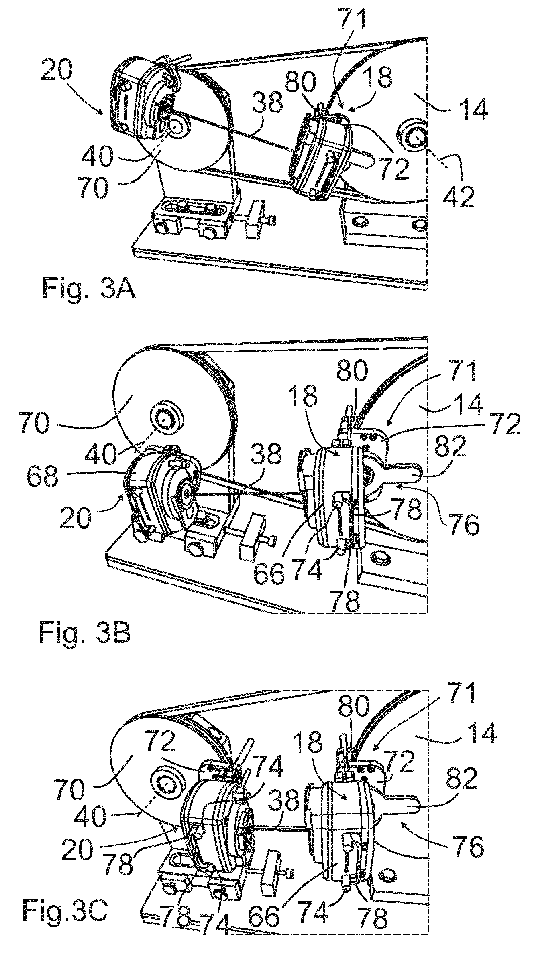

Die Laserlicht-Emissionseinrichtung 18 weist eine Halteeinrichtung 71 auf, mit welcher die Laserlicht-Emissionseinrichtung 18 derart in einer Position an der ersten Riemenscheibe 10 und der zweiten Riemenscheibe 14 angeordnet bzw. gehalten werden kann, dass die Laser-Schwenkachse 26 (vgl. auch Fig. 2B) parallel zu der jeweiligen Drehachse 40 bzw. 42 der Riemenscheibe 10 bzw. 14 orientiert ist. Hierfür weist die Halteeinrichtung 71 zwei Platten 72 und 80 auf (nur in den Fig.1B und 3A bis 3C veranschaulicht), um die Laserlicht-Emissionseinrichtung 18 an der ersten bzw. zweiten Riemenscheibe 14 klemmend zu halten, wobei die beiden Platten 72, 80 auf zwei Rundstäben bzw. Rundstangen 58 (vgl. Fig. 1 B) verschiebbar aufgenommen und über nicht näher dargestellte Arretierungsmittel an den Rundstangen 58 zum klemmenden Halten in einem Zustand arretiert werden können, in welchem sie an jeweils einer der einander entgegengesetzten Scheibenflächen 70 der ersten bzw. zweiten Riemenscheibe 14 anliegen.

Ferner kann die Mantelfläche 60 eines jeden Rundstabs 58 an zwei umlaufenden Flächen 62 der Riemenscheibe 10 bzw. 14 angelegt werden, wobei sich jede umlaufendende Fläche 62 in axialer Richtung der Riemenscheibe 10 bzw. 14 und umlaufendend um die Drehachse 40, 42 der ersten bzw. zweiten Riemenscheibe 10, 14 erstreckt, und wobei die Längsache 64 des Rundstabs 58 parallel zur Laser-Schwenkachse 26 der Laserlicht-Emissionseinrichtung 18 orientiert ist. Mittels der Rundstäbe 58 kann die Laserlicht-Emissionseinrichtung 18 derart in einer Position an der Riemenscheibe 10 bzw. 14 angeordnet werden, dass eine sehr exakte parallele Ausrichtung der Laser-Schwenkachse 26 zur Drehachse 40 bzw. 42 realisiert werden kann (vgl. insbesondere Fig.1B).

Das Gehäuse 66 der Laserlicht-Emissionseinrichtung 18 ist auf zwei Stangen 74 eines Halteelements 76 (vgl. auch Fig. 3B) der Halteeinrichtung 71 schiebbar und über zwei Arretierungshebel 78 an den Stangen 74 arretierbar. Zur Realisierung der Verschenkbarkeit des Lasers 22 um die rechtwinkelig zur Strahlachse 24 des Lasers 22 orientierte Laser-Schwenkachse 26 ist das Haltelement 76 drehbar an der Platte 72 angebracht. Das Halteelement 76 weist ferner einen Schwenkhebel 82 auf, über welchen der Laser 22 samt Gehäuse 66 um die Laser-Schwenkachse 26 verschwenkbar ist.

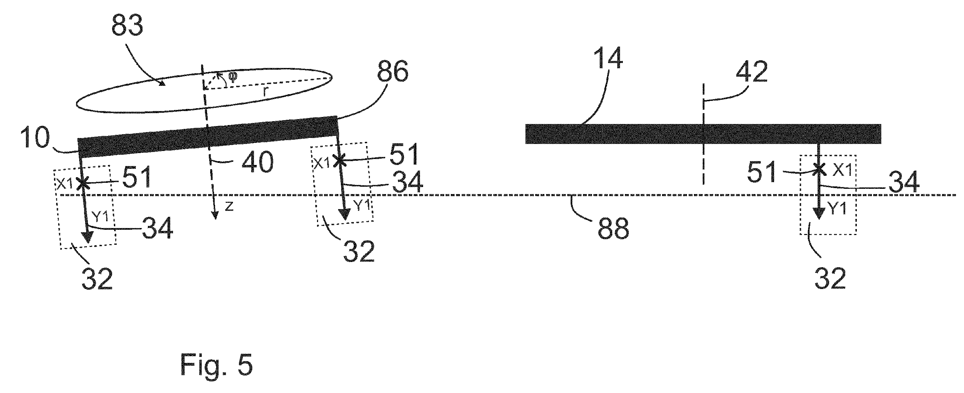

Die Laserlicht-Erfassungseinrichtung 20 weist ebenfalls eine Halteeinrichtung 73 (vgl. Fig. 1A) auf, mit welcher die Laserlicht-Erfassungseinrichtung 20 derart in jeweils einer Position an der Riemenscheibe 10 bzw. 14 angeordnet bzw. gehalten werden kann, dass die Y1-Koordinatenachse des Messfelds 32 parallel zur Drehachse 40 bzw. 42 der Riemenscheibe 10 bzw. 14 orientiert ist, die X1-Achse eine erwünschte räumliche Anordnung aufweist und das Zentrum 51 des Koordinatensystems 34 einen vordefinierten axialen Abstand zu der Riemenscheibe 10 bzw. 14 aufweist. Diese Anordnungsgeometrie ist in der Fig. 5 sehr schematisch in Draufsicht auf die Lauffläche 86 der ersten Riemenscheibe 10 für zwei Positionen der Laserlicht-Erfassungseinrichtung 20 an der ersten Riemenscheibe 10 veranschaulicht.

Der Fig. 5 ist auch zu entnehmen, wie die Lage des Koordinatensystems 34 des Messfelds 32 (bzw. die Lage des Zentrums 51 des Koordinatensystems 34 des Messfelds 32 relativ zu z.B. der ersten Riemenscheibe 10 in einem mit der ersten Riemenscheibe 10 körperfestem Riemenscheibenkoordinatensystem 83 in Form eines nur sehr schematisch gezeigten Zylinderkoordinatensystems 83 durch die Zylinderkoordinaten des Zentrums 51 definiert werden kann, wobei über die Zylinderkoordinaten des Zentrums 51 vorteilhaft auch die Position der gesamten Laserlicht-Erfassungseinrichtung 20 an der ersten Riemenscheibe 10 bzw. zweiten Riemenscheibe 14 definiert werden kann. Die Fig. 5 veranschaulicht auch die Lage der durch Verschenken des Lasers 22 um die Laser-Schwenkachse 26 bereitstellbaren Laserlicht-Referenzebene 88 für die zweite Riemenscheibe 14.

Die Halteeinrichtung 73 (vgl. Fig. 1A) ist nahezu baugleich zu der Halteeinrichtung 71 und unterscheidet sich von dieser nur dadurch, dass nur eine Platte 72 vorgesehen ist, die infolge ihrer magnetischen Ausbildung und der magnetischen Ausbildung der ersten und zweiten Riemenscheibe 10, 14 über Magnetkraft an der jeweiligen Scheibenfläche 70 flächig anliegend gehalten werden kann, um eine parallele Orientierung der Y1-Koordinatenachse des Messfelds 32 zu der Drehachse 40 bzw. 42 zu ermöglichen. Selbstverständlich kann die Halteeinrichtung 73 auch zur Gänze baugleich zu der obigen Halteeinrichtung 72 sein und mithin insbesondere auch die weitere Platte 80 aufweisen.

Auch das Gehäuse 68 der Laserlicht-Erfassungseinrichtung 20 ist über zwei Arretierungshebel 78 an Stangen 74 arretierbar (vgl. Fig. 3C)

Nachfolgend wird ein Ausführungsbeispiel des Verfahrens näher erläutert. Das Verfahren umfasst die Schritte A bis F.

In Schritt A (vgl. Fig. 2A) wird die Laserlicht-Emissionseinrichtung 18 in einer linken Position bzw. in der 9Uhr-Position an der zweiten Riemenscheibe 14 angeordnet, wobei die Laserlicht-Emissionseinrichtung 18 hierbei derart an der zweiten Riemenscheibe 14 angeordnet wird, dass die Laser-Schwenkachse 26 parallel zur Drehachse 42 der zweiten Riemenscheibe 14 orientiert ist. Diese Anordnung mit der erwünschten Orientierung kann mittels der Halteeinrichtung 71 auf einfache und praktische Weise realisiert werden.

In Schritt B (vgl. Fig. 2A) wird die Laserlicht-Erfassungseinrichtung 20 in einer 3Uhr-Position an der zweiten Riemenscheibe 14, die von der 9Uhr-Position der Laserlicht-Emissionseinrichtung 18 beabstandet ist, derart an der zweiten Riemenscheibe 14 angeordnet wird, dass die Y1-Koordinatenachse des Messfelds 32 parallel zur Drehachse 42 der zweiten Riemenscheibe 14 orientiert ist, die X1-Koordinatenachse eine erwünschte räumliche Anordnung aufweist und das Zentrum des Koordinatensystems 34 einen vordefinierten axialen Abstand zu der zweiten Riemenscheibe 14 aufweist. Diese Anordnung mit diesen erwünschten Voraussetzungen kann mittels der Halteeinrichtung 73 auf einfache und praktische Weise realisiert werden, wobei eine erwünschte räumliche Anordnung der X1-Koordinatenachse des Messfelds 32 durch Verschenken des Gehäuses 68 und mithin des Laserlicht-Sensors 30 um eine Verschwenkachse 44 bewerkstelligt werden kann, wobei das Verschenken durch Betätigen eines nicht veranschaulichten Schenkhebels bewerkstelligt werden kann, der baugleich zu dem Schwenkhebel 82 der Halteeinrichtung 71 ist.

In Schritt C (vgl. insbesondere auch Fig. 2B) erfolgt das Ausrichten der Richtung des von der Laserlicht-Emissionseinrichtung 18 emittierten Laserlichtstrahls 38 rechtwinkelig zur Drehachse 42 der zweiten Riemenscheibe 14 durch Verschwenken des Lasers 22 um die Verstellachse 28 und das Erfassen der Y1-Koordinate des Laserlicht-Flecks 36 auf dem Messfeld 32 durch den Laser-Lichtsensor 30 beim Bestrahlen des Messfelds 32 mit dem ausgerichteten Laserlichtstrahl 38. Das Verschenken des Lasers 22 erfolgt auf einfache und praktische Weise mit einer Rändelschraube 84 (vgl. Fig. 2A), die mit einer nicht näher dargestellten Verstelleinrichtung mechanisch wirkverbunden ist, um durch Drehen an der Rändelschraube 84 über die Verstelleinrichtung den Laser 22 um die Verstellachse 28 zu verschwenken.

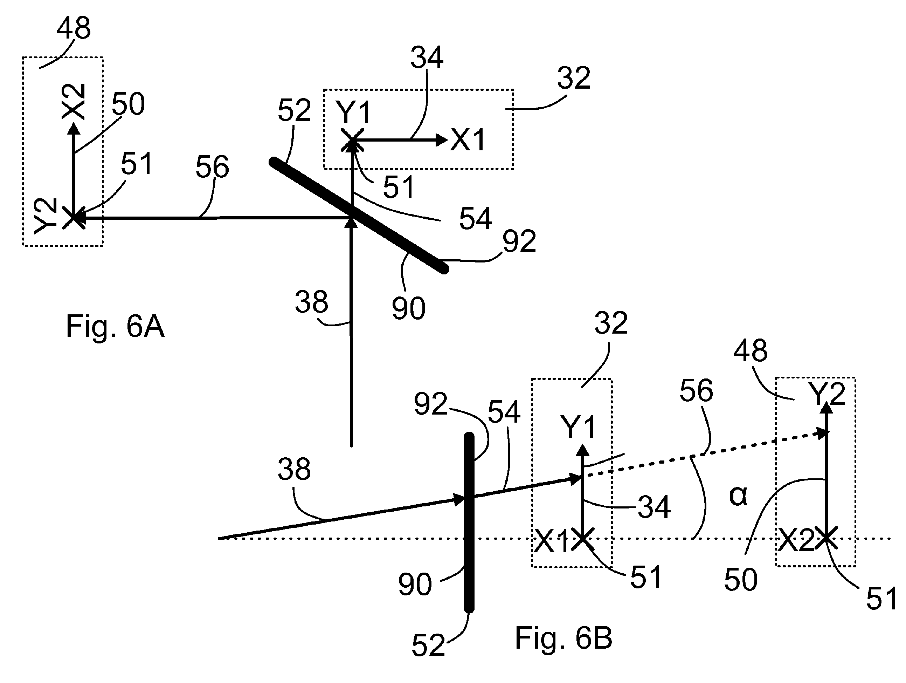

Insbesondere für das Ausrichten des Laserlichtstrahls 38 gemäß Schritt C weist die Laserlicht-Erfassungseinrichtung 20 in ihrem Gehäuse 68 ein zweites ebenes Messfeld 48 und einen Strahlungsteiler 52 auf - vgl. hierzu die schematischen Skizzen der Fig. 6A und 6B.

Das zweite Messfeld 48 (vgl. Fig. 6A) weist ein Koordinatensystem 50 mit einer X2-Koordinatenachse und einer zu der X2-Koordinatenachse rechtwinkeligen Y2-Koordinatenachse auf, wobei die Y2-Koordinatenachse des zweiten Messfelds 48 parallel zur Y1-Koordinatenachse des ersten Messfelds 32 orientiert ist.

Der Strahlungsteiler 52 teilt den auftreffenden Laserlichtstrahl 38 der Laserlicht-Emissionseinrichtung 18 vor dem Auftreffen auf die Messfelder 32 und 48 in einen ersten Teilstrahl 54 und einen zweiten Teilstrahl 56 auf.

Der erste Teilstrahl 54 kann auf das erste Messfeld 32 auftreffen und der zweite Teilstrahl 56 kann auf das zweite Messfeld 48 auftreffen. Die Laufzeit des ersten Teilstrahls 54 bis zu dem ersten Messfeld 32 ist kleiner als die Laufzeit des zweiten Teilstrahls 56 bis zu dem zweiten Messfeld 48.

Der Strahlungsteiler 52 weist eine ebene Eintrittsfläche 90 und eine zu dieser parallele ebene Austrittsfläche 92 auf, wobei die Eintrittsfläche 90 bzw. die Austrittfläche 92 parallel zur Y1-Koordinatenachse ausgerichtet ist.

Das erste und zweite Messfeld 32 und 48 sind derart in Bezug auf den Strahlungsteiler 52 angeordnet, dass wenn der erste Teilstrahl 54 beim Bestrahlen des ersten Messfelds 32 rechtwinkelig zur Y1-Koordinatenachse einen Laserlicht-Fleck im Zentrum 51 des Koordinatensystems 34 des ersten Messfelds 32 ausbildet, der zweite Teilstrahl 56 beim Bestrahlen des zweiten Messfelds 48 einen Laserlicht-Fleck im Zentrum 51 des Koordinatensystems 50 des zweiten Messfelds 48 ausbildet.

Infolge des Laufzeitunterschieds zwischen den beiden Teilstrahlen 54 und 56 liegt in einem Zustand, in welchem in Schritt C die Strahlrichtung des Laserlichtstrahls 38 von der Situation abweicht, in welchem die Strahlrichtung rechtwinkelig zur Drehachse 42 der zweiten Riemenscheibe 14 orientiert ist, eine Differenz zwischen der Y1-Koordinate des Laserlicht-Flecks auf dem ersten Messfeld 32 und der Y2-Koordinate des Laserlicht-Flecks auf dem zweiten Messfeld 48 vor, so dass in Schritt C der Laser 22 um die Verstellachse 28 verschwenkt wird bzw. solange verschwenkt wird bis die Differenz zwischen der Y1-Koordinate und der Y2-Koordinate gleich null ist. Oder in anderen Worten: Eine nicht rechtwinkelige Ausrichtung der Strahlrichtung des Lasers 22 hat infolge des Laufzeitunterschieds zwischen den beiden Teilstrahlen 54 und 56 eine Differenz zwischen der Y1-Koordinate und der Y2-Koordinate des Laser-Lichtflecks zur Folge.

Die Fig. 6A veranschaulicht die Anordnung in einer schematischen Schnittdarstellung mit einem Schnitt durch den Strahlungsteiler, der so gewählt ist, dass die Y1-Koordinatenachse und Y2-Koordinatenachse rechtwinklig aus der Zeichenebene heraustreten. Die Fig. 6 B hingegen veranschaulicht die Anordnung sehr schematisch von der Seite, um auch die Situation zu veranschaulichen, dass der Laserlichtstrahl 38 nicht rechtwinkelig zur Drehachse 42 der zweiten Riemenscheibe 14 einstrahlt, so dass in Fig. 6B eine Einstrahlsituation veranschaulicht ist, in welcher eine Differenz zwischen der Y1-Koordinate und der Y2-Koordinate vorliegt, die - wie auch oben dargelegt - zu null hin zu korrigieren ist.

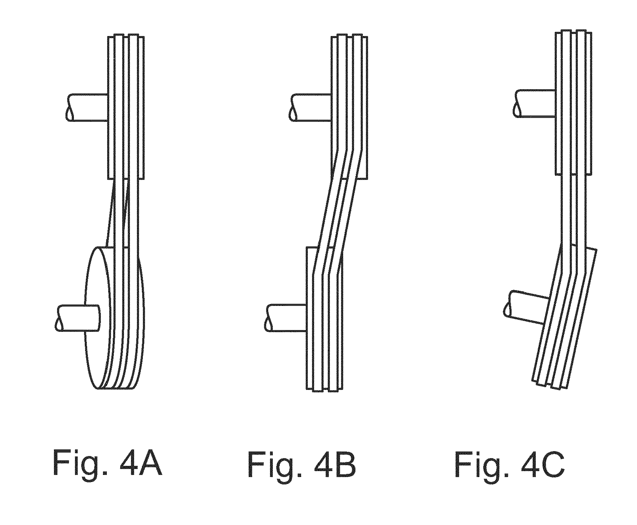

Die Fig. 6A und 6B zeigen auch, dass durch die beiden Messfelder 32 und 48 in Verbindung mit dem Strahlungsteiler 52 auf kleinem Bauraum ein erheblicher Laufzeitunterscheid bereitgestellt werden kann, so dass auf der Grundlage der Differenz zwischen der Y1-Koordinate und der Y2-Koordinate bzw. des Winkels α insbesondere auch vorteilhaft ein sogenannter horizontaler Winkelversatz (vgl. Fig. 4C) z.B. unter Verwendung der mathematischen Tangens-Funktion zwischen der ersten Riemenscheibe 10 und der zweiten Riemenscheibe 14 mit einer hohen Genauigkeit ermittelt werden kann. Hierfür ist lediglich erforderlich, die Laserlicht-Erfassungseinrichtung 20 in der 3Uhr-Position an der ersten Riemenscheibe 10 in der oben beschriebenen Weise anzuordnen und mit dem ausgerichteten Laserlichtstrahl 38 des Lasers 22 an der zweiten Riemenscheibe 14 zu bestrahlen, wobei ggf. erforderliche Korrekturen z.B. durch den Parallelversatz beim Durchgang des Laserlichtstrahls 38 durch den Strahlungsteiler 52 zu berücksichtigen sind.
In Schritt D erfolgt das zeitlich aufeinander folgende Anordnen der Laserlicht-Erfassungseinrichtung 20 in der 3Uhr-Position (vgl. Fig. 3C), in der 6Uhr-Position (vgl. Fig. 3B) und in der 12Uhr-Position (vgl. Fig. 3A), wobei die Anordnung in jeder der Positionen derart mittels der Halteeinrichtung 73 erfolgt, dass die oben dargelegten Bedingungen erfüllt sind und in jeder Position das Zentrum 51 des Koordinatensystems 34 des Messfelds 32 einen axialen Abstand zu der ersten Riemenscheibe 10 aufweist, der dem vordefinierten axialen Abstand gemäß Schritt B entspricht. Um den vordefinierten axialen Abstand einzuhalten wird das Gehäuse 68 der Laserlicht-Erfassungseinrichtung 20 insbesondere über die Arretierungshebel 78 an den Stangen 74 arretiert (vgl. Fig. 3C).

Ferner werden in jeder der obigen Positionen der Laser 22 und der Laserlicht-Sensor 30 durch Verschwenken des Laserlicht-Sensors 20 bzw. des Gehäuses 68 um die Verschwenkachse 44 (vgl. Fig. 2A) und/oder durch Verschwenken des Lasers 22 um die Laser-Schwenkachse 26 in eine relative Position zueinander gebracht, in welcher der Laserlichtstrahl 38 auf das Messfeld 32 auftreffen kann, um in jeder Position die X1-Koordinate und Y1-Koordinate wenigstens eines Laserlicht-Flecks auf dem Messfeld 32 zu erfassen, die sich in Schritt E beim Bestrahlen des Messfelds 32 mit dem ausgerichteten Laserlichtstrahl 38 des Lasers 22 der Laserlicht-Emissionseinrichtung 18 auf dem Messfeld 32 ausbilden. Vorzugsweise wird die relative Position derart durch Verschenken um die Verschwenkachse 44 und die Laser-Schwenkachse 26 gewählt, dass der Laserlichtstrahl 38, sofern möglich, annähernd in zum Messfeld 32 normaler Richtung auf dieses auftrifft, da das Messfeld 32 dann sehr genau die Koordinaten erfassen kann.

In Schritt F erfolgt das Ermitteln der Ausrichtung der ersten Riemenscheibe 10 in Bezug auf die zweite Riemenscheibe 14 auf der Grundlage der erfassten X1-Koordinaten und Y1-Koordinaten der Laserlicht-Flecken in den drei obigen Positionen und auf der Grundlage der in Schritt C erfassten Y1-Koordinate.

Bei der obigen 6Uhr-Position und der obigen 12-Uhr schneidet eine gedachte Verbindungsgerade, die das Zentrum 51 des Koordinatensystems 34 des Messfelds 32 in der einen Position mit dem Zentrum 51 des Koordinatensystems 34 des Messfelds 32 in der anderen Position verbindet, die Drehachse 40 der ersten Riemenscheibe. In jeder der obigen Positionen weist das Zentrum des Koordinatensystems 34 ferner einen Abstand zu der Drehachse 40 auf, der dem Durchmesser der ersten Riemenscheibe 10 entspricht. Diese Abstandssituation ist auch in Fig. 5 veranschaulicht, die zeigt, dass das Zentrum 51 des Koordinatensystems 34 des Messfelds 32 in den beiden veranschaulichten Positionen auf radialer Höhe des Durchmessers der ersten Riemenscheibe 10 angeordnet ist. Insgesamt betrachtet kann durch diese Gestaltung ein sehr großer Abstand zwischen den beiden Positionen nach Art einer großen Basislänge realisiert werden, wodurch die Genauigkeit der ermittelten Ausrichtung der ersten Riemenscheibe 10 in Bezug auf die zweite Riemenscheibe 14 wesentlich verbessert werden kann.

Die beim Bestrahlen des Messfelds 32 mit dem Laserlichtstrahl 38 in der obigen 12Uhr-Position und 6Uhr-Position erfassten Y1-Koodinaten und X1-Koordinaten können insbesondere zum Ermitteln des in Fig. 4A veranschaulichten Vertikalversatzes verwendet werden.

Insbesondere kann die Laserlicht-Erfassungseinrichtung 20 in Schritt D alternativ in einer einzigen Position an der ersten Riemenscheibe 10 angeordnet und der Laser 22 der Laserlicht-Emissionseinrichtung 18 in Schritt E derart verschwenkt werden, dass sich der Laserlicht-Fleck auf dem Messfeld 32 bewegt. Auch hierdurch können die zum Ermitteln der Ausrichtung erforderlichen X1-Koordinaten und Y1-Koordinaten von insgesamt wenigstens drei Laserlicht-Flecken auf dem Messfeld erfasst werden. Vor allem kann aus der von dem Laserlicht auf dem Messfeld 32 beschriebenen Spur auch einfach ein eventuell vorhandener vertikaler Winkelversatz durch einfache geometrische Berechnungen - z.B. mittels der Tangens-Funktion - ermittelt werden.

Der in Fig. 4B veranschaulichte Parallelversatz kann auf einfache Weise auf der Grundlage der in Schritt C erfassten Y1-Koordinate und einer einzigen Y1-Koordinate beim Bestrahlen des Messfelds 32 mit dem Laserlichtstrahl 38 in einer Position an der ersten Riemenscheibe 10 ermittelt werden.

### Bezugszeichenliste

- 10: erste Riemenscheibe
- 12: Riemenantriebs
- 13: Riemen
- 14: zweite Riemenscheibe
- 16: Meßsystem
- 18: Laserlicht-Emissionseinrichtung
- 20: Laserlicht-Erfassungseinrichtung
- 22: Laser
- 24: Strahlachse
- 26: Laser-Schwenkachse
- 28: Verstellachse
- 30: Laserlicht-Sensor
- 32: ebenes Messfeld
- 34: Koordinatensystem
- 36: Laserlicht-Fleck
- 38: Laserlichtstrahl
- 40: Drehachse erste Riemenscheibe
- 42: Drehachse zweite Riemenscheibe
- 44: Verschwenkachse
- 48: ebenes Messfeld
- 50: Koordinatensystem
- 51: Zentrum
- 52: Strahlungsteiler
- 54: erster Teilstrahl
- 56: zweiter Teilstrahl
- 58: Rundstab
- 60: Mantelfläche
- 62: umlaufende Fläche
- 64: Längsachse
- 66: Gehäuse
- 68: Gehäuse
- 70: Scheibenfläche
- 71: Halteeinrichtung
- 72: Platte
- 73: Halteeinrichtung
- 74: Stange
- 76: Halteelement
- 78: Arretierungshebel
- 80: Platte
- 82: Schwenkhebel
- 83: Riemenscheibenkoordinatensystem
- 84: Rändelschraube
- 86: Lauffläche
- 88: Laserlicht-Referenzebene
- 90: Eintrittsfläche
- 92: Austrittsfläche

## Patentansprüche

1. Verfahren zum Ermitteln der Ausrichtung einer ersten Riemenscheibe (10) eines Riemenantriebs (12) in Bezug auf eine zweite Riemenscheibe (14) des Riemenantriebs (12) mittels eines Meßsystems (16), wobei das Meßsystem (16) eine Laserlicht-Emissionseinrichtung (18) und eine Laserlicht-Erfassungseinrichtung (20) umfasst, wobei
die Laserlicht-Emissionseinrichtung (18) einen Laser (22) mit einer Strahlachse (24) aufweist, der um eine rechtwinkelig zur Strahlachse (24) des Lasers (22) orientierte Laser-Schwenkachse (26) verschwenkbar ist, wobei der Laser (22) ferner um eine rechtwinkelig zur Laser-Schwenkachse (26) und Strahlachse (24) orientierte Verstellachse (28) der Laserlicht-Emissionseinrichtung (18) verschwenkbar ist,
wobei die Laserlicht-Erfassungseinrichtung (20) einen Laserlicht-Sensor (30) mit einem ebenen Messfeld (32) umfasst, wobei das Messfeld (32) ein Koordinatensystem (34) mit einer X1-Koordinatenachse und einer zu der X1-Koordinatenachse rechtwinkeligen Y1-Koordinatenachse aufweist, wobei der Laserlicht-Sensor (30) dazu eingerichtet ist, die X1-Koordinate und Y1-Koordinate eines Laserlicht-Flecks (36) des auf das Messfeld (32) auftreffenden Laserlichtstrahls (38) auf dem Messfeld (32) zu erfassen,
wobei das Verfahren die folgenden Schritte umfasst:
(A) Anordnen der Laserlicht-Emissionseinrichtung (18) in einer beliebigen Position an der zweiten Riemenscheibe (14), wobei die Laserlicht-Emissionseinrichtung (18) derart an der zweiten Riemenscheibe (14) angeordnet wird, dass die Laser-Schwenkachse (26) parallel zur Drehachse (42) der zweiten Riemenscheibe (14) orientiert ist,
(B) Anordnen der Laserlicht-Erfassungseinrichtung (20) in einer Position an der zweiten Riemenscheibe (14), die von der Position der Laserlicht-Emissionseinrichtung (18) beabstandet ist, wobei die Laserlicht-Erfassungseinrichtung (20) derart an der zweiten Riemenscheibe (14) angeordnet wird, dass die Y1-Koordinatenachse des Messfelds (32) parallel zur Drehachse (42) der zweiten Riemenscheibe (14) orientiert ist, die X1-Koordinatenachse eine erwünschte räumliche Anordnung relativ zu der zweiten Riemenscheibe (14) aufweist und das Zentrum (51) des Koordinatensystems (34) einen vordefinierten axialen Abstand zu der zweiten Riemenscheibe (14) aufweist,
(C) Ausrichten der Richtung des von der Laserlicht-Emissionseinrichtung (18) emittierten Laserlichtstrahls (38) rechtwinkelig zur Drehachse (42) der zweiten Riemenscheibe durch Verschwenken des Lasers (22) um die Verstellachse (28) und Erfassen der Y1-Koordinate des Laserlicht-Flecks (36) auf dem Messfeld (32) durch den Laser-Lichtsensor (30) beim Bestrahlen des Messfelds (32) mit dem ausgerichteten Laserlichtstrahl (38),
(D) Anordnen der Laserlicht-Erfassungseinrichtung (20) in wenigstens einer Position an der ersten Riemenscheibe (10), wobei die Laserlicht-Erfassungseinrichtung (20) derart in der Position an der ersten Riemenscheibe (10) angeordnet wird, dass die Y1-Koordinatenachse des Messfelds (32) parallel zur Drehachse (40) der ersten Riemenscheibe (10) orientiert ist, die X1-Koordinatenachse eine erwünschte räumliche Anordnung relativ zu der ersten Riemenscheibe (10) aufweist und das Zentrum (51) des Koordinatensystems (34) einen vordefinierten axialen Abstand zu der ersten Riemenscheibe (10) aufweist,
(E) Bestrahlen des Messfelds (32) mit dem ausgerichteten Laserlichtstrahl (38) des Lasers (22) der Laserlicht-Emissionseinrichtung (18) und Erfassen der X1-Koordinaten und Y1-Koordinaten der sich auf dem Messfeld (32) ausbildenden Laserlicht-Flecken (36), wobei das Messfeld (32) in der wenigstens einen Position derart durch Verschwenken des Lasers (22) um die Laser-Schwenkachse (26) bestrahlt wird, dass die X1-Koordinaten und Y1-Koordinaten von insgesamt wenigstens drei Laserlicht-Flecken (36) auf dem Messfeld (32) erfasst werden, und
(F) Ermitteln der Ausrichtung der ersten Riemenscheibe (10) in Bezug auf die zweite Riemenscheibe (14) auf der Grundlage der in Schritt E erfassten X1-Koordinaten und Y1-Koordinaten der Laserlicht-Flecken (36) in der wenigstens einen Position und der in Schritt C erfassten Y1-Koordinate.

2. Verfahren nach Anspruch 1, **dadurch gekennzeichnet, dass** der vordefinierte axiale Abstand zu der zweiten Riemenscheibe (14) in Schritt (B) dem vordefinierten axialen Abstand zu der ersten Riemenscheibe (10) in Schritt (D) entspricht.

3. Verfahren nach Anspruch 1 oder 2, **dadurch gekennzeichnet, dass** der Laserlicht-Sensor (30) um eine Verschwenkachse (44) verschwenkbar ist, die parallel zur Y1-Koordinaten-achse des Messfelds (32) orientiert ist, wobei die Laserlicht-Erfassungseinrichtung (20) in Schritt (D) in drei voneinander beabstandeten Positionen an der ersten Riemenscheibe (10) angeordnet wird und in jeder Position der Laser (22) und der Laserlicht-Sensor (30) durch Verschwenken des Laserlicht-Sensors (20) um die Verschwenkachse (44) und/oder durch Verschwenken des Lasers (22) um die Laser-Schwenkachse (26) in eine relative Position zueinander gebracht werden, in welcher der Laserlichtstrahl (38) auf das Messfeld (32) auftreffen kann, wobei in jeder Position die X1-Koordinate und Y1-Koordinate wenigstens eines Laserlicht-Flecks (36) auf dem Messfeld (32) erfasst werden.

4. Verfahren nach Anspruch 3, **dadurch gekennzeichnet, dass** die drei Positionen in umfänglicher Richtung voneinander beabstandet sind.

5. Verfahren nach Anspruch 4, **dadurch gekennzeichnet, dass** zwei der Positionen derart gewählt sind, dass eine Verbindungsgerade, die das Zentrum des Koordinatensystems (34) des Messfelds (32) in der einen Position mit dem Zentrum des Koordinatensystems (34) des Messfelds (32) in der anderen Position verbindet, die Drehachse (40) der ersten Riemenscheibe (10) schneidet.

6. Verfahren nach Anspruch 4 oder 5, **dadurch gekennzeichnet, dass** in jeder der beiden Positionen das Zentrum (51) des Koordinatensystems (34) einen Abstand zu der Drehachse (40) aufweist, der dem Durchmesser der Riemenscheibe (10) entspricht oder der dem 0,8-fachen bis 0,95-fachen des Durchmessers der Riemenscheibe (10) entspricht.

7. Verfahren nach Anspruch 1, **dadurch gekennzeichnet, dass** die Laserlicht-Erfassungseinrichtung (20) in Schritt (D) in einer Position an der ersten Riemenscheibe (10) angeordnet wird und der Laser (22) der Laserlicht-Emissionseinrichtung (18) in Schritt (E) derart verschwenkt wird, dass sich der Laserlicht-Fleck (36) auf dem Messfeld (32) bewegt.

8. Verfahren nach einem der vorangehenden Ansprüche, **dadurch gekennzeichnet, dass** die Laserlicht-Erfassungseinrichtung (20) ein
zweites Messfeld (48) mit einem Koordinatensystem (50) mit einer X2-Koordinatenachse und einer zu der X2-Koordinatenachse rechtwinkeligen Y2-Koordinatenachse aufweist, wobei die Y2-Koordinatenachse des zweiten Messfelds (48) parallel zur Y1-Koordinatenachse des ersten Messfelds (32) orientiert ist, wobei ferner
ein Strahlungsteiler (52) vorgesehen ist, der den Laserlichtstrahl (38) der Laserlicht-Emissionseinrichtung (18) vor dem Auftreffen auf die Messfelder (32, 48) in einen ersten Teilstrahl (54) und einen zweiten Teilstrahl (56) aufteilt,
wobei der erste Teilstrahl (54) auf das erste Messfeld (32) auftreffen kann, und wobei der zweite Teilstrahl (56) auf das zweite Messfeld (48) auftreffen kann,
wobei die Laufzeit des ersten Teilstrahls (54) bis zu dem ersten Messfeld (32) kleiner ist als die Laufzeit des zweiten Teilstrahls (56) bis zu dem zweiten Messfeld (48),
wobei der Strahlungsteiler (52) eine ebene Eintrittsfläche (90) und eine zu dieser parallele Austrittsfläche (92) aufweist, wobei die Eintrittsfläche (90) parallel zur Y1-Koordinatenachse ausgerichtet ist,
wobei das erste und zweite Messfeld (32, 48) derart in Bezug auf den Strahlungsteiler (52) angeordnet sind, dass wenn der erste Teilstrahl (54) beim Bestrahlen des ersten Messfelds (32) rechtwinkelig zur Y1-Koordinatenachse einen Laserlicht-Fleck (36) im Zentrum (51) des Koordinatensystems (34) des ersten Messfelds (32) ausbildet, der zweite Teilstrahl (56) beim Bestrahlen des zweiten Messfelds (48) einen Laserlicht-Fleck (36) im Zentrum (51) des Koordinatensystems (50) des zweiten Messfelds (48) ausbildet,
wobei infolge des Laufzeitunterschieds zwischen den beiden Teilstrahlen (54, 56) in einem Zustand, in welchem in Schritt (C) die Strahlrichtung des Laserlichtstrahls (38) von dem Zustand abweicht, in welchem die Strahlrichtung rechtwinkelig zur Drehachse (42) der zweiten Riemenscheibe (14) orientiert ist, eine Differenz zwischen der Y1-Koordinate des Laserlicht-Flecks (36) auf dem ersten Messfeld (32) und der Y2-Koordinate des Laserlicht-Flecks (36) auf dem zweiten Messfeld vorliegt, so dass in Schritt (C) der Laser (22) um die Verstellachse (28) verschwenkt wird bis die Differenz zwischen der Y1-Koordinate und der Y2-Koordinate gleich null ist.

## Claims

1. Method for establishing the alignment of a first pulley (10) of a belt drive (12) in relation to a second pulley (14) of the belt drive (12) by means of a measurement system (16), wherein the measurement system (16) comprises a laser light emission apparatus (18) and a laser light detection apparatus (20), wherein
the laser light emission apparatus (18) has a laser (22) with a beam axis (24), said laser being swivellable about a laser swivel axis (26) oriented at right angles to the beam axis (24) of the laser (22), wherein the laser (22) is furthermore swivellable about an adjustment axis (28) of the laser light emission apparatus (18), oriented at right angles to the laser swivel axis (26) and the beam axis (24),
wherein the laser light detection apparatus (20) comprises a laser light sensor (30) with a planar measurement field (32), wherein the measurement field (32) has a coordinate system (34) with an X1-coordinate axis and a Y1-coordinate axis at right angles to the X1-coordinate axis, wherein the laser light sensor (30) is configured to detect on the measurement field (32) the X1-coordinate and the Y1-coordinate of a laser light spot (36) of the laser light beam (38) incident on the measurement field (32),
wherein the method comprises the following steps:
(A) arranging the laser light emission apparatus (18) at any position at the second pulley (14), wherein the laser light emission apparatus (18) is arranged at the second pulley (14) in such a way that the laser swivel axis (26) is oriented parallel to the axis of rotation (42) of the second pulley (14),
(B) arranging the laser light detection apparatus (20) at a position at the second pulley (14) which is at a distance from the position of the laser light emission apparatus (18), wherein the laser light detection apparatus (20) is arranged at the second pulley (14) in such a way that the Y1-coordinate axis of the measurement field (32) is oriented parallel to the axis of rotation (42) of the second pulley (14), the X1-coordinate axis has a desired spatial arrangement relative to the second pulley (14) and the centre (51) of the coordinate system (34) has a predefined axial distance from the second pulley (14),
(C) aligning the direction of the laser light beam (38) emitted by the laser light emission apparatus (18) at right angles to the axis of rotation (42) of the second pulley by swivelling the laser (22) about the adjustment axis (28) and detecting the Y1-coordinate of the laser light spot (36) on the measurement field (32) by the laser light sensor (30) when irradiating the measurement field (32) with the aligned laser light beam (38),
(D) arranging the laser light detection apparatus (20) at at least one position at the first pulley (10), wherein the laser light detection apparatus (20) is arranged at the position at the first pulley (10) in such a way that the Y1-coordinate axis of the measurement field (32) is oriented parallel to the axis of rotation (40) of the first pulley (10), the X1-coordinate axis has a desired spatial arrangement relative to the first pulley (10) and the centre (51) of the coordinate system (34) has a predefined axial distance from the first pulley (10),
(E) irradiating the measurement field (32) with the aligned laser light beam (38) of the laser (22) of the laser light emission apparatus (18) and detecting the X1-coordinates and Y1-coordinates of the laser light spots (36) forming on the measurement field (32), wherein the measurement field (32) is irradiated in the at least one position in such a way by swivelling the laser (22) about the laser swivel axis (26) that the X1-coordinates and Y1-coordinates of a total of at least three laser light spots (36) are detected on the measurement field (32), and
(F) establishing the alignment of the first pulley (10) in relation to the second pulley (14) on the basis of the X1-coordinates and Y1-coordinates of the laser light spots (36) detected in step E in the at least one position and the Y1-coordinate detected in step C.

2. Method according to Claim 1, **characterized in that** the pre-defined axial distance to the second pulley (14) in step (B) corresponds to the pre-defined axial distance to the first pulley (10) in step (D).

3. Method according to Claim 1 or 2, **characterized in that** the laser light sensor (30) is swivellable about a swivel axis (44) oriented parallel to the Y1-coordinate axis of the measurement field (32), wherein the laser light detection apparatus (20) is arranged at three spaced apart positions at the first pulley (10) in step (D) and the laser (22) and the laser light sensor (30) are brought into a relative position relative to one another in each position by swivelling the laser light sensor (20) about the swivel axis (44) and/or by swivelling the laser (22) about the laser swivel axis (26), in which relative position the laser light beam (38) can be incident on the measurement field (32), wherein the X1-coordinate and Y1-coordinate of at least one laser light spot (36) on the measurement field (32) are detected in each position.

4. Method according to Claim 3, **characterized in that** the three positions are spaced apart from one another in the circumferential direction.

5. Method according to Claim 4, **characterized in that** two of the positions are selected in such a way that a connecting straight line, which connects the centre of the coordinate system (34) of the measurement field (32) in the one position with the centre of the coordinate system (34) of the measurement field (32) in the other position, intersects the axis of rotation (40) of the first pulley (10).

6. Method according to Claim 4 or 5, **characterized in that** the centre (51) of the coordinate system (34) has a distance from the axis of rotation (40) in each one of the two positions, said distance corresponding to the diameter of the pulley (10) or corresponding to 0.8-times to 0.95-times the diameter of the pulley (10).

7. Method according to Claim 1, **characterized in that** the laser light detection apparatus (20) is arranged at a position at the first pulley (10) in step (D) and the laser (22) of the laser light emission apparatus (18) is swivelled in step (E) in such a way that the laser light spot (36) moves on the measurement field (32).

8. Method according to one of the preceding claims, **characterized in that** the laser light detection apparatus (20) comprises a
second measurement field (48) with a coordinate system (50) with an X2-coordinate axis and a Y2-coordinate axis at right angles to the X2-coordinate axis, wherein the Y2-coordinate axis of the second measurement field (48) is oriented parallel to the Y1-coordinate axis of the first measurement field (32), wherein provision is furthermore made of a
beam splitter (52), which splits the laser light beam (38) of the laser light emission apparatus (18) into a first partial beam (54) and a second partial beam (56) prior to the incidence on the measurement fields (32, 48),
wherein the first partial beam (54) can be incident on the first measurement field (32) and wherein the second partial beam (56) can be incident on the second measurement field (48),
wherein the time-of-flight of the first partial beam (54) to the first measurement field (32) is less than the time-of-flight of the second partial beam (56) to the second measurement field (48),
wherein the beam splitter (52) has a planar entrance surface (90) and an exit surface (92) parallel thereto, wherein the entrance surface (90) is aligned parallel to the Y1-coordinate axis,
wherein the first and the second measurement field (32, 48) are arranged in relation to the beam splitter (52) in such a way that, if the first partial beam (54) forms a laser light spot (36) in the centre (51) of the coordinate system (34) of the first measurement field (32) when irradiating the first measurement field (32) at right angles to the Y1-coordinate axis, then the second partial beam (56) forms a laser light spot (36) in the centre (51) of the coordinate system (50) of the second measurement field (48) when irradiating the second measurement field (48),
wherein there is a difference between the Y1-coordinate of the laser light spot (36) on the first measurement field (32) and the Y2-coordinate of the laser light spot (36) on the second measurement field as a result of the difference in the time-of-flight between the two partial beams (54, 56) in a state in which, in step (C), the beam direction of the laser light beam (38) differs from the state in which the beam direction is oriented at right angles to the axis of rotation (42) of the second pulley (14), and so, in step (C), the laser (22) is swivelled about the adjustment axis (28) until the difference between the Y1-coordinate and the Y2-coordinate equals zero.

## Revendications

1. Procédé destiné à déterminer l'orientation d'une première poulie à courroie (10) d'un entraînement à courroie (12) par rapport à une seconde poulie à courroie (14) de l'entraînement à courroie (12) au moyen d'un système de mesure (16), dans lequel le système de mesure (16) comprend un dispositif d'émission de lumière laser (18) et un dispositif de détection de lumière laser (20), dans lequel le dispositif d'émission de lumière laser (18) comporte un laser (22) ayant un axe de faisceau (24) qui peut être amené à pivoter autour d'un axe de pivotement de laser (26) orienté perpendiculairement à l'axe de faisceau (24) du laser (22), dans lequel le laser (22) peut en outre être amené à pivoter autour d'un axe de réglage (28) du dispositif d'émission laser (18), orienté perpendiculairement à l'axe de pivotement (26) du laser et à l'axe de faisceau (24),
dans lequel le dispositif de détection de lumière laser (20) comprend un capteur de lumière laser (30) ayant un champ de mesure plan (32), dans lequel le champ de mesure (32) présente un système de coordonnées (34) ayant un axe de coordonnées X1 et un axe de coordonnées Y1 perpendiculaire à l'axe de coordonnées X1, dans lequel le capteur de lumière laser (30) est conçu pour détecter la coordonnée X1 et la coordonnée Y1 sur le champ de mesure (32) d'une tache de lumière laser (36) du faisceau laser (38) incident sur le champ de mesure (32),
dans lequel le procédé comprend les étapes consistant à :
(A) disposer le dispositif d'émission de lumière laser (18) à une position quelconque sur la seconde poulie à courroie (14), dans lequel le dispositif d'émission de lumière laser (18) est disposé sur la seconde poulie à courroie (14) de manière à ce que l'axe de pivotement (26) du laser soit orienté parallèlement à l'axe de rotation (42) de la seconde poulie à courroie (14),
(B) disposer le dispositif de détection de lumière laser (20) à une position, sur la deuxième poulie à courroie (14), qui est espacée de la position du dispositif d'émission de lumière laser (18), dans lequel le dispositif de détection de lumière laser (20) est disposé sur la seconde poulie à courroie (14) de manière à ce que l'axe de coordonnées Y1 du champ de mesure (32) soit orienté parallèlement à l'axe de rotation (42) de la seconde poulie à courroie (14), l'axe de coordonnées X1 présente une disposition spatiale souhaitée par rapport à la seconde poulie à courroie (14) et le centre (51) du système de coordonnées (34) présente un espacement axial prédéfini par rapport à la seconde poulie à courroie (14),
(C) orienter la direction du faisceau de lumière laser (38) émis par le dispositif d'émission de lumière laser (18) perpendiculairement à l'axe de rotation (42) de la seconde poulie à courroie en faisant pivoter le laser (22) autour de l'axe de réglage (28) et détecter la coordonnée Y1 de la tache de lumière laser (36) sur le champ de mesure (32) au moyen du capteur de lumière laser (30) en exposant le champ de mesure (32) au faisceau de lumière laser orienté (38),
(D) disposer le dispositif de détection de lumière laser (20) à au moins une position sur la première poulie à courroie (10), dans lequel le dispositif de détection de lumière laser (20) est disposé à ladite position, sur la première poulie à courroie (10), de manière à ce que l'axe de coordonnée Y1 du champ de mesure (32) soit orienté parallèlement à l'axe de rotation (40) de la première poulie à courroie (10), l'axe de coordonnées X1 présente une disposition spatiale souhaitée par rapport à la première poulie à courroie (10) et le centre (51) du système de coordonnées (34) présente un espacement axial prédéfini par rapport à la première poulie à courroie (10),
(E) exposer le champ de mesure (32) au faisceau de lumière laser orienté (38) du laser (22) du dispositif d'émission de lumière laser (18) et détecter les coordonnées X1 et les coordonnées Y1 des taches de lumière laser (36) se formant sur le champ de mesure (32), dans lequel le champ de mesure (32) est exposé à ladite au moins une position par pivotement du laser (22) autour de l'axe de pivotement (26) du laser de manière à ce que les coordonnées X1 et les coordonnées Y1 d'un total d'au moins trois taches de lumière laser (36) soient détectées sur le champ de mesure (32), et
(F) déterminer l'orientation de la première poulie à courroie (10) par rapport à la seconde poulie à courroie (14) sur la base des coordonnées X1 et des coordonnées Y1 des taches de lumière laser (36) détectées lors de l'étape E à laite au moins une position et de la coordonnée Y1 détectée lors de l'étape C.

2. Procédé selon la revendication 1, **caractérisé en ce que** l'espacement axial prédéfini par rapport à la seconde poulie à courroie (14) lors de l'étape (B) correspond à l'espacement axial prédéfini par rapport à la première poulie à courroie (10) lors de l'étape (D).

3. Procédé selon la revendication 1 ou 2, **caractérisé en ce que** le capteur de lumière laser (30) peut être amené à pivoter autour d'un axe de pivotement (44) qui est orienté parallèlement à l'axe de coordonnées Y1 du champ de mesure (32), dans lequel le dispositif de détection de lumière laser (20), lors de l'étape (D), est disposé à trois positions espacées les unes des autres sur la première poulie à courroie (10) et, à chaque position, le laser (22) et le capteur de lumière laser (30) sont amenées à une position relative l'un par rapport à l'autre, par pivotement du capteur de lumière laser (20) autour de l'axe de pivotement (44) et/ou par pivotement du laser (22) autour de l'axe pivotement de laser (26), à laquelle le faisceau de lumière laser (38) peut être incident sur le champ de mesure (32), dans lequel, à chaque position, la coordonnée X1 et la coordonnées Y1 d'au moins une tache de lumière laser (36) sont détectées sur le champ de mesure (32).

4. Procédé selon la revendication 3, **caractérisé en ce que** les trois positions sont espacées les unes des autres dans la direction circonférentielle.

5. Procédé selon la revendication 4, **caractérisé en ce que** deux des positions sont sélectionnées de manière à ce qu'une droite de liaison, qui relie le centre du système de coordonnées (34) du champ de mesure (32), à ladite position, au centre du système de coordonnées (34) du champ de mesure (32), à l'autre position, coupe par l'axe de rotation (40) de la première poulie à courroie (10).

6. Procédé selon la revendication 4 ou 5, **caractérisé en ce que**, à chacune des deux positions, le centre (51) du système de coordonnées (34) présente un espacement, par rapport à l'axe de rotation (40), qui correspond au diamètre de la poulie à courroie (10) ou à 0,8 fois à 0,95 fois le diamètre de la poulie à courroie (10).

7. Procédé selon la revendication 1, **caractérisé en ce que** le dispositif de détection de lumière laser (20), lors de l'étape (D), est disposé à une position, sur la première poulie à courroie (10), et le laser (22) du dispositif d'émission de lumière laser (18), lors de l'étape (E), est amené à pivoter de manière à ce que la tache de lumière laser (36) se déplace sur le champ de mesure (32).

8. Procédé selon l'une quelconque des revendications précédentes, **caractérisé en ce que** le dispositif de détection de lumière laser (20) présente un second champ de mesure (48) ayant un système de données (50) ayant un axe de coordonnées X2 et un axe de coordonnées Y2 perpendiculaire à l'axe de coordonnées X2, dans lequel l'axe de coordonnées Y2 du second champ de mesure (48) est orienté parallèlement à l'axe de coordonnées Y1 du premier champ de mesure (32), dans lequel, en outre,
il est prévu un diviseur de faisceau (52) qui divise le faisceau laser (38) du dispositif d'émission de lumière laser (18), avant qu'il soit incident sur le champ de mesure (32, 48), en un premier faisceau partiel (54) et en un second faisceau partiel (56),
dans lequel le premier faisceau partiel (54) peut être incident sur le premier champ de mesure (32) et dans lequel le second faisceau partiel (56) peut être incident sur le second champ de mesure (48),
dans lequel le temps de propagation du premier faisceau partiel (54) jusqu'au premier champ de mesure (32) est inférieur au temps de propagation du second faisceau partiel (56) jusqu'au second champ de mesure (48),
dans lequel le diviseur de faisceau (52) présente une surface d'incidence plane (90) et une surface de sortie (92) parallèle à cette dernière, dans lequel la surface d'incidence (90) est orientée parallèlement à l'axe de coordonnées Y1,
dans lequel les premier et second champs de mesure (32, 48) sont disposés, par rapport au diviseur de faisceau (52), de manière à ce que, lorsque le premier faisceau partiel (54), lors de l'exposition du premier champ de mesure (32) perpendiculairement à l'axe de coordonnées Y1 forme une tache de lumière laser (36) au centre (51) du système de coordonnées (34) du premier champ de mesure (32), le second faisceau partiel (56), lors de l'exposition du second champ de mesure (48), forme une tache de lumière laser (36) au centre (51) du système de coordonnées (50) du second champ de mesure (48),
dans lequel, du fait de la différence de temps de propagation entre les deux faisceaux partiels (54, 56) dans un état dans lequel, lors de l'étape (C), la direction de faisceau du faisceau de lumière laser (38) s'écarte de l'état dans lequel la direction de faisceau est orientée perpendiculairement à l'axe de rotation (42) de la seconde poulie à courroie (14), une différence entre la coordonnée Y1 de la tache de lumière laser (36) sur le premier champ de mesure (32) et la coordonnée Y2 de la tache de lumière laser (36) sur le second champ de mesure est présente, de sorte que, lors de l'étape (C), le laser (22) est amené à pivoter autour de l'axe de réglage (28) jusqu'à ce que la différence entre la coordonnée Y1 et la coordonnée Y2 soit égale à zéro.
